(19) Europäisches Patentamt
European Patent Office
Office européen des brevets

(11) EP 4 127 062 B1

(12) **EUROPEAN PATENT SPECIFICATION**

(45) Date of publication and mention of the grant of the patent:
**08.05.2024 Bulletin 2024/19**

(21) Application number: **21713409.7**

(22) Date of filing: **23.03.2021**

(51) International Patent Classification (IPC):
***C08L 77/02*** *(2006.01)* ***C08L 77/06*** *(2006.01)*

(52) Cooperative Patent Classification (CPC):
(C-Sets available)
**C08L 77/02; C08L 77/06** (Cont.)

(86) International application number:
**PCT/EP2021/057438**

(87) International publication number:
**WO 2021/191209 (30.09.2021 Gazette 2021/39)**

(54) **HEAT-AGING RESISTANT POLYAMIDE MOLDING COMPOSITIONS**

GEGEN WÄRMEALTERUNG BESTÄNDIGE POLYAMIDFORMZUSAMMENSETZUNGEN

COMPOSITIONS DE MOULAGE DE POLYAMIDE RÉSISTANT AU VIEILLISSEMENT THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2020 EP 20165585**

(43) Date of publication of application:
**08.02.2023 Bulletin 2023/06**

(73) Proprietor: **BASF SE**
**67056 Ludwigshafen am Rhein (DE)**

(72) Inventors:
- **WAGNER, Sebastian**
  **67056 Ludwigshafen (DE)**
- **CREMER, Jens**
  **67056 Ludwigshafen (DE)**

(74) Representative: **BASF IP Association**
**BASF SE**
**GBI-C006**
**67056 Ludwigshafen (DE)**

(56) References cited:
**DE-B- 1 123 103**
**DE-B- 1 152 252**
**US-A1- 2011 021 687**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 77/02, C08K 5/18, C08L 79/02;**
**C08L 77/02, C08L 61/22, C08L 79/02;**
**C08L 77/06, C08K 5/18, C08L 79/02;**
**C08L 77/06, C08L 61/22, C08L 79/02**

## Description

The invention relates to thermoplastic molding compositions comprising polyamide which have an improved heat-aging resistance.

The invention further relates to the use of the molding compositions of the invention for producing fibers, foils and moldings of any type, and also to the resultant fibers, foils and moldings.

Furthermore, the invention relates to a mixture comprising a specific combination of heat-aging resistant additives for polyamide molding compositions.

Thermoplastic polyamides, such as PA6 and PA66, are often used in the form of glass fiber-reinforced molding compositions as materials in the design of components which during their lifetime have exposure to elevated temperatures and/or humidity with thermo-oxidative degradation.

Different heat-aging resistant additives which counteract or delay thermo-oxidative degradation are used in polyamide molding compositions, for example a combination of Cu-containing stabilizers, organic HALS (hindered amine light stabilizers) compounds or sterically hindered phenols or polyhydroxy alcohols. It is highly desirable to improve the heat-aging resistance (HAR) of polyamides, since this can achieve longer lifetimes for components subject to thermal stress, or can reduce the risk that these fail. Additionally, improved HAR can also permit the use of the components at higher temperatures.

EP 1 851 265 B1 discloses thermoplastic molding compositions comprising a thermoplastic polyamide, a polyethylenimine homo- or copolymer, a lubricant and a copper-containing stabilizer. The molding materials are said to have an improved HAR, good flowability and good mechanical properties.

EP 2 356 174 B1 discloses thermoplastic molding compositions comprising a thermoplastic polyamide, a specific branched polyethylenimine polymer having a ratio of primary/secondary/tertiary amines of from 1/0.7-1.4/0.3-1.1 to 1/0.8-1.3/0.5-0.9, a lubricant, a copper-containing stabilizer, fibrous or particulate fillers and nigrosine. The moldings made from this molding composition shall have an improved weld line strength and increased thermal stability.

EP 2 379 644 B1 relates to thermoplastic molding compositions comprising a polyamide, a polyethylenimine homopolymer having a ratio of primary, secondary and tertiary amino groups of 1/0.91/0.64, an average molecular weight $M_W$ of 1300, and iron powder. The molding compositions shall have an improved HAR, good flowability, and good mechanical properties.

EP 0 463 512 A1 discloses a stabilizer combination and its use for preparing stabilized impact-modified polyamides. The stabilizer combination comprises Cu (I) halides, triaryl phosphines, alkali halogenides and amines, preferably aromatic amines. Condensation products of diphenyl amine and acetone are disclosed.

DE 1 152 252 discloses processes for stabilizing polycaprolactam. The stabilizer is a condensation product of diaryl amine and ketone.

DE 1 123 103 relates to a process for stabilizing high molecular weight linear polycondensates containing amide groups. Condensation products of N,N'-diphenyl-p-phenylenediamine and formaldehyde are described.

US 2011/021687 A1 relates to a thermoplastic polyamide composition comprising A) at least one thermoplastic polyamide, B) at least one hyperbranched polyethylenimine, C) at least one amorphous oxide and/or oxide hydrate of at least one metal or semimetal with a number-average diameter of the primary particles of from 0.5 to 20 nm.

DE 1152252 B discloses the stabilization of polycaprolactam by amino compounds. The amino compounds are water insoluble diarylamine-ketone condensation products. Optionally further amino compounds are additionally used.

DE 1123103 B discloses the stabilization of polyamides with derivatives of secondary aromatic amines. The derivatives of secondary aromatic amines are condensation products of aliphatic aldehydes with secondary aromatic amines.

The heat-aging resistance of the known molding compositions remains unsatisfactory, in particular over prolonged periods of exposure to heat. In addition, due to increasing electrification more and more applications require materials to be free of any halide-based stabilizer systems (e.g. copper iodide) due the risk of corrosion and respective failures. Therefore, none of the compositions disclosed in the quoted literature results in a good thermal stability while avoiding the application of the widely used metal-halide stabilizers.

It was therefore an object of the present invention to provide thermoplastic molding compositions comprising polyamides which have improved HAR, and which, after heat-aging, retain good mechanical properties, without the need to employ copper compounds or metal halides.

The object is achieved by a thermoplastic molding composition, comprising

a) 30 to 99.8 wt% of at least one thermoplastic polyamide as component A;
b) 0.001 to 5 wt% of at least one polyethylenimine homo-or copolymer as component B;
c) 0.1 to 2.0 wt% of at least one condensation product of secondary aryl amines and aliphatic aldehydes, aliphatic ketones, or mixtures thereof, or a combination of least one secondary aryl amine and the at least one condensation

product; as component C;
d) 0 to 3 wt% of at least one lubricant as component D;
e) 0 to 50 wt% of at least one fibrous and/or particulate filler as component E;
f) 0 to 25 wt% of further additives as component F; wherein the total of wt% of components A to F is 100 wt%, which is free from copper.

The object is furthermore achieved by a mixture comprising or consisting of

b) 0.001 to 5 parts by weight of at least one polyethylenimine homo- or copolymer as component B;
c) 0.1 to 2.0 parts by weight of at least one condensation product of secondary aryl amines and aliphatic aldehydes, aliphatic ketones or mixtures thereof, or a combination of least one secondary aryl amine and the at least one condensation product; as component C.

In this mixture, the amounts of components Band C listed below as wt% can be employed as parts by weight (e.g. 0.5 wt% becomes 0.5 parts by weight).
The object is furthermore achieved by the use of this mixture for improving the HAR of polyamides, especially after heat-aging.
The object is furthermore achieved by a process for preparing the thermoplastic molding composition as mentioned above by mixing the components A to F.
The object is furthermore achieved by the use of the thermoplastic molding composition for producing fibers, foils and moldings of any type, and by fibers, foils and moldings made of the thermoplastic molding composition as defined above.
According to the present invention, it has been found that a specific combination of at least one polyethylenimine homo- or copolymer with at least one condensation product of secondary aryl amines and aliphatic aldehydes, aliphatic ketones, or mixtures thereof, or a combination of least one secondary aryl amine and the at least one condensation product;
acts as heat stabilizer in thermoplastic polyamide molding compositions, and significantly improves the heat-aging resistance over prolonged periods of exposure to heat. By including this specific combination in the thermoplastic molding compositions comprising at least one thermoplastic polyamide, the thermo-oxidative degeneration of the molding composition can be prevented or retarded.
By employing the specific combination as heat stabilizer for improving the heat-aging resistance and prevention of thermo-oxidative degeneration, it is not necessary to employ copper compounds or metal halides in the molding compositions as stabilizers.
Copper compounds, like copper halides and metal halides, can lead to corrosion due to the migration of ions. Therefore, the mixture according to the present invention allows for the preparation of thermoplastic molding compositions which are copper-free and metal-halide-free and thus are electro-friendly or electro-neutral. Therefore, the molding compositions according to the present invention can be used for electro-friendly applications, including electro-mobility, electrification and connectivity.
Thus, the thermoplastic molding compositions can be free from metal halides, specifically Cu halides and alkali metal halides, and can still achieve a high HAR.
Components Band C do not migrate from the thermoplastic molding composition under preparations, at molding temperatures and during lifetime of the molded part under elevated service temperatures. This effect is most pronounced in thermoplastic molding compositions based on polyamides as the main component.
The number average molecular weight as well as the weight average molecular weight ($M_n$, $M_w$) and polydispersity data can be obtained using gel permeation chromatography (GPC) in hexafluoroisopropanol as solvent with PMMA calibration.
This molecular weight determination can be employed for all components of the thermoplastic molding compositions according to the present invention.
The molding compositions of the invention comprise, as component A, from 30 to 99.8 wt%, preferably from 35 to 99.7 wt%, and in particular from 45 to 99.7 wt% of at least one thermoplastic polyamide.
If components D, E or F, or combinations thereof are present in the thermoplastic molding composition, the maximum amount of component A is decreased by the minimum amount of each of components D, E or F, or a combination thereof.
The polyamides of the molding compositions of the invention generally have an intrinsic viscosity of from 90 to 350 ml/g, preferably from 110 to 240 ml/g, determined in a 0.5% strength by weight solution in 96% strength by weight sulfuric acid at 25°C to ISO 307.
Preference is given to semicrystalline or amorphous resins with a molecular weight (weight average) of at least 5000, described by way of example in the following US patents: 2 071 250, 2 071 251, 2 130 523, 2 130 948, 2 241 322,

2 312 966, 2 512 606, and 3 393 210.

Examples of these are polyamides that derive from lactams having from 7 to 13 ring members, e.g. polycaprolactam, polycaprylolactam, and polylaurolactam, and also polyamides obtained via reaction of dicarboxylic acids with diamines.

Dicarboxylic acids which may be used are alkanedicarboxylic acids having from 6 to 12, in particular from 6 to 10 carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, and 1,5-diamino-2-methyl pentane.

Preferred polyamides are polyhexamethyleneadipamide, polyhexamethylenesebacamide, and polycaprolactam, and also nylon-6/6,6 copolyamides, in particular having a proportion of from 5 to 95 wt% of caprolactam units (e.g. Ultramid® C31 from BASF SE).

Other suitable polyamides are obtainable from ω-aminoalkyinitriles e.g. aminocapronitrile (PA 6) and adipodinitrile with hexamethylenediamine (PA 66) via what is known as direct polymerization in the presence of water, for example as described in DE-A 10313681, EP-A 1198491 and EP 922065.

Mention may also be made of polyamides obtainable, by way of example, via condensation of 1,4-diaminobutane with adipic acid at an elevated temperature (nylon-4,6). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of nylon-6,6 with other polyamides, in particular blends of nylon-6 and nylon-66, and to nylon-6/6,6 copolyamides and nylon-6,6/6 copolyamides.

Other copolyamides which have proven particularly advantageous are semiaromatic copolyamides, such as PA 6/6T and PA 66/6T, where the triamine content of these is less than 0.5 wt%, preferably less than 0.3 wt% (see EP-A 299 444). Other polyamides resistant to high temperatures are known from EP-A 19 94 075 (PA 6T/6I/MXD6).

The processes described in EP-A 129 195 and 129 196 can be used to prepare the preferred semiaromatic copolyamides with low triamine content.

The following list, which is not comprehensive, comprises the polyamides A) mentioned and other polyamides A) for the purposes of the invention, and the monomers comprised:

AB polymers:

| | |
|---|---|
| PA 4 | Pyrrolidone |
| PA 6 | ε-Caprolactam |
| PA 7 | Ethanolactam |
| PA 8 | Caprylolactam |
| PA 9 | 9-Aminopelargonic acid |
| PA 11 | 11-Aminoundecanoic acid |
| PA 12 | Laurolactam |

AA/BB polymers:

| | |
|---|---|
| PA 46 | Tetramethylenediamine, adipic acid |
| PA 66 | Hexamethylenediamine, adipic acid |
| PA 69 | Hexamethylenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |

AA/BB polymers:

| | |
|---|---|
| PA 6I | Hexamethylenediamine, isophthalic acid |
| PA 6-3-T | Trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |

Most preferred are PA 6, PA 66, PA 6/66 and PA 66/6.

Suitable copolyamides are constructed from:

A1) 20.0 to 90.0 wt% of units derived from terephthalic acid and hexamethylenediamine,
A2) 0 to 50.0 wt% of units derived from ε-caprolactam,
A3) 0 to 80.0 wt% of units derived from adipic acid and hexamethylenediamine,
A4) 0 to 40.0 wt% of further polyamide-forming monomers, wherein the proportion of component A2) or A3) or A4), or mixtures thereof is at least 10.0 wt%.

Component A1) comprises 20.0 to 90.0 wt% of units derived from terephthalic acid and hexamethylenediamine.

In addition to the units derived from terephthalic acid and hexamethylenediamine, the copolyamides optionally comprise units derived from ε-caprolactam and/or units derived from adipic acid and hexamethylenediamine and/or units derived from further polyamide-forming monomers.

Aromatic dicarboxylic acids A4) comprise 8 to 16 carbon atoms. Suitable aromatic dicarboxylic acids include, for example, isophthalic acid, substituted terephthalic and isophthalic acids, such as 3-t-butylisophthalic acid, polycyclic dicarboxylic acids, for example 4,4'- and 3,3'-diphenyldicarboxylic acid, 4,4'- and 3,3'-diphenylmethanedicarboxylic acid, 4,4'- and 3,3'-sulfodiphenylcar-boxylic acid, 1,4- or 2,6-naphthalenedicarboxylic acid, phenoxyterephthalic acid, isophthalic acid being particularly preferred.

Further polyamide-forming monomers A4) may be derived from dicarboxylic acids having 4 to 16 carbon atoms and aliphatic or cycloaliphatic diamines having 4 to 16 carbon atoms, and also from aminocarboxylic acids/corresponding lactams having 7 to 12 carbon atoms. Examples of suitable monomers of these types mention are suberic acid, azelaic acid and sebacic acid as representatives of aliphatic dicarboxylic acids, 1,4-butanediamine, 1,5-pentanediamine, piperazine, 4,4'-diaminodicyclohexylmethane, 2,2-(4,4'-diaminodicyclohexyl)propane and 3,3'-dimethyl-4,4'-diaminodicyclohexylmethane or meta-xylylenediamine as representatives of diamines and caprolactam, enantholactam, ω-aminoundecanoic acid and laurolactam as representatives of lactams/aminocarboxylic acids.

Suitable such copolyamides are more particularly elucidated in DE-A-10 2009 011 668.

Component B is employed in an amount of from 0.001 to 5 wt%, preferably 0.01 to 1.5 wt%, in particular 0.1 to 1.0 wt%, for example 0.15 to 0.35 wt%.

Component B is at least one polyethylenimine homo- or co-polymer.

In the context of the present invention, polyethylenimines are understood to be both homo- and copolymers which are obtainable, for example, by the processes disclosed in ULLMANN'S Encyclopedia of Industrial Chemistry, electronic release, under the keyword "aziridines" or according to WO-A 94/12560.

The homopolymers are generally obtainable by polymerization of ethyleneimine (aziridine) in aqueous or organic solution in the presence of acid-eliminating compounds, acids or Lewis acids. Such homopolymers are branched polymers which generally comprise primary, secondary and tertiary amino groups in a ratio of approximately 30% to 40% to 30%. The distribution of the amino groups can generally be determined by means of $^{13}C$ NMR spectroscopy.

The comonomers used are preferably compounds which have at least two amino functions. Examples of suitable comonomers include alkylenediamines having from 2 to 10 carbon atoms in the alkylene radical, preference being given to ethylenediamine and propylenediamine. Further suitable comonomers are diethylenetriamine, triethylenetetramine, tetraethylenepentamine, dipropylenetriamine, tripropylenetetramine, dihexamethylenetriamine, aminopropylethylenedia-mine and bisaminopropylethylenediamine.

Polyethylenimines typically have an average molecular weight (weight-average) of from 100 to 3000000, preferably from 800 to 2000000 (determined by means of light scattering).

Additionally suitable are crosslinked polyethylenimines which are obtainable by reaction of polyethylenimines with bi- or polyfunctional crosslinkers which have, as a functional group, at least one halohydrin, glycidyl, aziridine or isocyanate unit or a halogen atom. Examples include epichlorohydrin or bischlorohydrin ethers of polyalkylene glycols having from 2 to 100 ethylene oxide and/or propylene oxide units, and also the compounds listed in DE-A 19 93 17 20 and U.S. Pat. No. 4,144,123. Processes for preparing crosslinked polyethylenimines are known, inter alia, from the above-mentioned documents and also EP-A 895 521 and EP-A 25 515.

Preferred polyethylenimine homo- or copolymers are furthermore disclosed in EP 2 356 174 B1 in paragraphs [0026] to [0035] and EP 1 851 265 B1, paragraphs [0022] to [0031], as well as EP 2 379 644 B1, paragraphs [0023] to [0025].

Also suitable are grafted polyethylenimines, in which the grafting agents used may be all compounds which can react with the amino or imino groups of the polyethylenimines. Suitable grafting agents and processes for preparing grafted polyethylenimines can be taken, for example, from EP-A 675 914.

Equally suitable polyethylenimines in the context of the invention are amidated polymers which are typically obtainable by reacting polyethylenimines with carboxylic acids, their esters or anhydrides, carboxamides or carbonyl halides. Depending on the proportion of amidated nitrogen atoms in the polyethylenimine chain, the amidated polymers may subsequently be crosslinked with the crosslinkers mentioned. Preference is given to amidating up to 30% of the amino functions, so that sufficient primary and/or secondary nitrogen atoms are still available for a subsequent crosslinking reaction.

Also suitable are alkoxylated polyethylenimines which are obtainable, for example, by reaction of polyethylenimine with ethylene oxide and/or propylene oxide. Such alkoxylated polymers too are subsequently crosslinkable.

Further suitable polyethylenimines include hydroxyl-containing polyethylenimines and amphoteric polyethylenimines (incorporation of anionic groups), and also lipophilic polyethylenimines which are generally obtained by incorporation of long-chain hydrocarbon radicals into the polymer chain. Processes for preparing such polyethylenimines are known to those skilled in the art, so that further details on this subject are unnecessary.

Polyethylenimines can be linear, essentially linear or branched.

In one embodiment of the present invention, polyethylenimines are selected from highly branched polyethylenimines. Highly branched polyethylenimines are characterized by their high degree of branching (DB). The degree of branching can be determined, for example, by $^{13}C$-NMR spectroscopy, preferably in $D_2O$, and is defined as follows:

$$DB = D + T/D + T + L$$

with D (dendritic) corresponding to the fraction of tertiary amino groups, L (linear) corresponding to the fraction of secondary amino groups and T (terminal) corresponding to the fraction of primary amino groups.

Within the context of the present invention, highly branched polyethylenimines are polyethylenimines with DB in the range from 0.25 to 0.90.

In one embodiment of the present invention, polyethylenimine is selected from highly branched polyethylenimines (homopolymers) with an average molecular weight $M_w$ in the range from 600 to 75 000 g/mol, preferably in the range from 800 to 25 000 g/mol.

In another embodiment of the present invention, polyethylenimines are selected from copolymers of ethylenimine, such as copolymers of ethylenimine with at least one diamine with two $NH_2$ groups per molecule other than ethylenimine, for example propylene imine, or with at least one compound with three $NH_2$ groups per molecule such as melamine.

Preferably, component B is selected from

- homopolymers of ethylenimine,
- copolymers of ethylenimine and amines having at least two amino groups,
- crosslinked polyethylenimines,
- grafted polyethylenimines,
- amidated polymers obtainable by reaction of polyethylenimines with carboxylic acids or carboxylic esters, carboxylic anhydrides, carboxamides or carbonyl halides,
- alkoxylated polyethylenimines,
- hydroxyl-containing polyethylenimines,
- amphoteric polyethylenimines and
- lipophilic polyethylenimines.

As component C, 0.1 to 2.0 wt%, preferably 0.2 to 1.6 wt%, more preferably 0.2 to 0.9 wt% at least one

condensation product of secondary aryl amines and aliphatic aldehydes, aliphatic ketones or mixtures thereof, or a combination of least one secondary aryl amine and the at least one condensation product; are employed.

Thus, at least one condensation product of secondary aryl amines and aliphatic aldehydes, aliphatic ketones, or mixtures of aliphatic aldehydes or aliphatic ketones can be employed. Most preferably, a combination of secondary aryl amine and a condensation product is employed.

In a further embodiment, 0.1 to 2.0 wt%, preferably 0.2 to 1.6 wt%, more preferably 0.2 to 0.9 wt% of at least one condensation product of secondary aryl amines and aliphatic aldehydes, aliphatic ketones, or mixtures thereof with at least one secondary aryl amine is employed as component C.

Preferably, secondary aryl amine and condensation products are employed in a weight ratio of from 0.5:20 to 20:0.5, more preferably 1:10 to 10:1, most preferably 1:5 to 5:1.

More preferably, component C comprises or is at least one condensation product of diaryl amine with formaldehyde and/or acetone. Preferably, component C further comprises at least one secondary aryl amine in addition to the condensation product.

By secondary aryl amine is meant an amine compound that contains two carbon radicals chemically bound to a nitrogen atom, where at least one, and preferably both carbon radicals, are aromatic. One example is diphenylamine. Preferably, at least one of the aromatic radicals, such as, for example, a phenyl, naphthyl or heteroaromatic group, is substituted with at least one substituent, preferably containing 1 to 20 carbon atoms. Examples of suitable secondary aryl amines include 4,4'-di(α,α-dimethylbenzyl)diphenylamine available commercially as Naugard® 445 from Uniroyal Chemical Company; the secondary aryl amine condensation product of the reaction of diphenylamine with acetone, available commercially as Aminox® from Uniroyal Chemical Company; and para-(paratoluenesulfonylamido) diphenylamine also available from Uniroyal Chemical Company as Naugard® SA. Other suitable secondary aryl amines include N,N'-di-(2-naphthyl)-p-phenylenediamine, available from ICI Rubber Chemicals, Calcutta, India. Other suitable secondary aryl amines include 4,4'-bis(α,α'-tertiaryoctyl)diphenylamine, 4,4'-bis(α-methylbenzhydryl)diphenylamine, and others as mentioned EP 0 509 282 B1.

Suitable condensation products of carbonyl compounds, like formaldehyde, acetaldehyde or acetone, and diphenyl amines which can be substituted, are described in EP 0 463 512 A1, DE-AS 1 123 103 and DE-AS 1 152 252.

Preferred amines can be those of formula I disclosed in EP 0 463 512 A1 on page 3, line 37 to page 5, line 29. Condensation products of diaryl amines and ketones can be as disclosed in DE-AS 1 152 252. Specifically, this reference discloses condensation products of diphenyl amine and phenyl naphthyl amines with acetone. For the condensation of diaryl amines with aliphatic ketones, further reference can be made to US 1,906,935 and US 1,975,167.

Condensation products of aliphatic aldehydes with secondary aromatic amines that can be employed according to the present invention are disclosed in DE-AS 1 123 103, see specifically column 1, lines 29 to 50. The secondary aromatic amines contain one aryl rest residue and a further residue, which can be an aromatic, aliphatic or cycloaliphatic residue.

Suitable secondary aromatic amines are depicted in formula (I), see column 1, line 29 to column 3, line 22. Suitable secondary amines are e.g. N,N'-diphenyl-p-phenylene diamine and N,N'-di-beta-naphthyl-p-phenylene diamine or N,N'-dicyclohexyl-p-phenylene diamine. For further examples, please refer to this reference.

Suitable secondary aryl amines are disclosed in EP 2 307 480 B1, see specifically paragraphs [0046] to [0048].

Aliphatic aldehydes in the sense of the present invention are e.g. monoaldehydes, like formaldehyde, acetaldehyde, propionaldehyde, butyraldehyde, isobutyraldehyde and 2-ethyl-capronal-dehyde, as well as dialdehydes, like dioxal, malondialdehyde and succendialdehyde.

Amines and aldehydes (or ketones) can be employed in equimolar amounts.

The preferred aliphatic ketone is acetone.

In a most preferred embodiment of the invention, component C comprises at least one condensation product (condensate or polycondensate) of diaryl amine with formaldehyde and acetone. In the condensation product, preferably equimolar amounts of diaryl amine on one hand and formaldehyde and acetone on the other hand are employed. Furthermore, component C preferably further comprises at least one secondary aryl amine. Mixtures of the condensation product and the secondary aryl amine are most preferred.

A suitable component C can be obtained from OKA-Tec GmbH, Germany, as OKAFLEX® EM.

As component D, at least one lubricant can be employed. The amount of component D is from 0 to 3 wt%, preferably from 0 to 1.5 wt%, more preferably from 0 to 1.0 wt%.

If present, the amount of component D is from 0.05 to 3 wt%, preferably from 0.1 to 1.5 wt%, more preferably from 0.1 to 1.0 wt%.

If component D is present, the maximum amount of component A is decreased by the minimum amount of component D. It is therefore decreased by 0.05 wt%, preferably 0.1 wt%.

The polyamide molding compositions according to the present invention need not contain component D. According to a first embodiment, therefore no component D is contained in the thermoplastic molding composition. However, by additionally employing component D, the fluidity of the thermoplastic molding composition can be further increased.

Therefore, according to a second embodiment of the present invention, the thermoplastic molding composition contains from 0.05 to 3 wt%, preferably from 0.1 to 1.5 wt%, more preferably from 0.1 to 1.0 wt% of component D. The molding compositions containing component D in these amounts are specifically preferred according to the present invention.

Preference is given to the salts of Al, of alkali metals, or of alkaline earth metals, or esters or amides of fatty acids having from 10 to 44 carbon atoms, preferably having from 12 to 44 carbon atoms.

The metal ions are preferably alkaline earth metal and Al, particular preference being given to Ca or Mg.

Preferred metal salts are Ca stearate and Ca montanate, and also Al stearate.

It is also possible to use a mixture of various salts, in any desired mixing ratio.

The carboxylic acids can be monobasic or dibasic. Examples which may be mentioned are pelargonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols forming the esters can be monohydric to tetrahydric. Examples of alcohols are n-butanol, n-octanol, stearyl alcohol, ethylene glycol, propylene glycol, neopentyl glycol, pentaerythritol, preference being given to glycerol and pentaerythritol.

The aliphatic amines forming the amides can be mono- to tribasic. Examples of these are stearylamine, ethylenediamine, propylenediamine, hexamethylenediamine, di(6-aminohexyl)amine, particular preference being given to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use a mixture of various esters or amides, or of esters with amides in combination, in any desired mixing ratio.

As component E, the thermoplastic molding composition contains 0 to 50 wt%, preferably 0 to 45 wt%, more preferably 0 to 40 wt% of at least one fibrous and/or particulate filler.

Preferably, component E comprises glass fibers and is present in an amount of from 10 to 50 wt%, more preferably 15 to 45 wt%, most preferably 20 to 40 wt%.

If component E is present, the maximum amount of component A is decreased by the minimum amount of component E, so that the total amount of components A to F is still 100 wt%.

Fibrous or particulate fillers E that may be mentioned are carbon fibers, glass fibers, glass beads, amorphous silica, calcium silicate, calcium metasilicate, magnesium carbonate, kaolin, chalk, powdered quartz, mica, barium sulfate, and feldspar.

Preferred fibrous fillers that may be mentioned are carbon fibers, aramid fibers, and potassium titanate fibers, particular preference being given to glass fibers in the form of E glass. These can be used as rovings or in the commercially available forms of chopped glass.

The fibrous fillers may have been surface-pretreated with a silane compound to improve compatibility with the thermoplastic.

Suitable silane compounds have the general formula:

$$(X-(CH_2)_1)_k-Si-(O-C_mH_{2m+1})_{4-k}$$

where the definitions of the substituents are as follows:

X NH$_2$-, 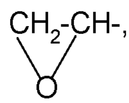, HO-,

n is a whole number from 2 to 10, preferably 3 to 4,

m is a whole number from 1 to 5, preferably 1 to 2, and

k is a whole number from 1 to 3, preferably 1.

Preferred silane compounds are aminopropyltrimethoxysilane, aminobutyltrimethoxysilane, aminopropyltriethoxysilane and aminobutyltriethoxysilane, and also the corresponding silanes which comprise a glycidyl group as substituent X.

The amounts of the silane compounds generally used for surface-coating are from 0.01 to 2 wt%, preferably from 0.025 to 1.0 wt% and in particular from 0.05 to 0.5 wt% (based on component E).

Acicular mineral fillers are also suitable.

For the purposes of the invention, acicular mineral fillers are mineral fillers with strongly developed acicular character. An example is acicular wollastonite. The mineral preferably has an LID (length to diameter) ratio of from 8:1

to 35:1, preferably from 8:1 to 11:1. The mineral filler may optionally have been pretreated with the abovementioned silane compounds, but the pretreatment is not essential.

Other fillers which may be mentioned are kaolin, calcined kaolin, wollastonite, talc and chalk, and also lamellar or acicular nanofillers, the amounts of these preferably being from 0.1 to 10%. Materials preferred for this purpose are boehmite, bentonite, montmorillonite, vermiculite, hectorite, and laponite. The lamellar nanofillers are organically modified by prior art methods, to give them good compatibility with the organic binder. Addition of the lamellar or acicular nanofillers to the inventive nanocomposites gives a further increase in mechanical strength.

As component F, the molding compositions of the present invention can contain 0 to 25 wt%, preferably 0 to 20 wt%, more preferably 0 to 15 wt% of further additives.

If further additives are employed, the minimum amount is preferably 0.1 wt%, more preferably 0.25 wt%, most preferably 0.5 wt%.

The thermoplastic molding compositions of the invention can comprise as component F conventional processing aids, further stabilizers, oxidation retarders, agents to counteract decomposition by heat and decomposition by ultraviolet light, mold-release agents, colorants, such as dyes and pigments, nucleating agents, plasticizers, etc.

As component F, 0.05 to 3 wt%, preferably 0.1 to 2 wt%, in particular 0.1 to 1 wt% of at least one sterically hindered phenol antioxidant can be employed.

It has preferably a molecular weight of more than 500 g/mol, more preferably of more than 1000 g/mol. Additionally, component C should preferably exhibit a high thermal stability, e.g. maximum of 5% weight loss, more preferably maximum of 2% weight loss, measured under nitrogen at 300°C within a TGA (thermogravimetric analysis) experiment (40°C to 120°C with 10°C/min, isothermal the later temperature for 15 min followed by 120°C to 600°C at 20°C/min).

It has preferably at least one, more preferably at least two phenol groups substituted by at least one branched $C_{3-12}$-alkyl group as sterically hindering group. The substituted phenol groups are covalently linked with the structure of component C.

Suitable sterically hindered phenols are in principle all of the compounds which have a phenolic structure and which have at least one bulky group on the phenolic ring. A bulky group is for example a branched $C_{3-12}$-alkyl group, preferably a branched $C_{3-6}$-alkyl group, more preferably an isopropyl or tert.-butyl group.

It is preferable to use, for example, compounds of the formula

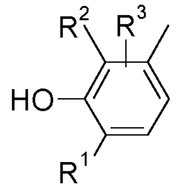

where:

$R^1$ and $R^2$ are an alkyl group, a substituted alkyl group, or a substituted triazole group, and where the radicals $R^1$ and $R^2$ may be identical or different, and $R^3$ is an alkyl group, a substituted alkyl group, an alkoxy group, or a substituted amino group. The alkyl and alkoxy residues have preferably 1 to 12 carbon atoms, more preferably 1 to 6 carbon atoms. Substituents are preferably $C_{1-12}$-alkyl, more preferably $C_{1-6}$-alkyl, most preferably $C_{1-4}$-alkyl. At least one of $R^1$ to $R^3$ is preferably a bulky group as defined above.

Antioxidants of the abovementioned type are described by way of example in DE-A 27 02 661 (US-A 4 360 617).

Another group of preferred sterically hindered phenols is provided by those derived from substituted phenylcarboxylic acids, in particular from substituted phenylpropionic acids, which preferably have at least one bulky group on the phenyl group. They contain at least one, preferably two covalently linked substituted phenylcarboxylic acid unit(s) in their structure, which preferably have at least one bulky group on the phenyl group.

Preferred phenylcarboxylic acids are phenyl-$C_{1-12}$-carboxylic acids, more preferably phenyl-$C_{2-6}$-carboxylic acids. The phenyl group is preferably a phenol group having at least one bulky group on the phenolic ring, as indicated above. Thus, the above-mentioned sterically hindered phenols are preferably covalently linked with a $C_{1-12}$-alkane carboxylic acid, more preferably a linear $C_{2-6}$-alkane carboxylic acid.

Particularly preferred compounds from this class are compounds of the formula

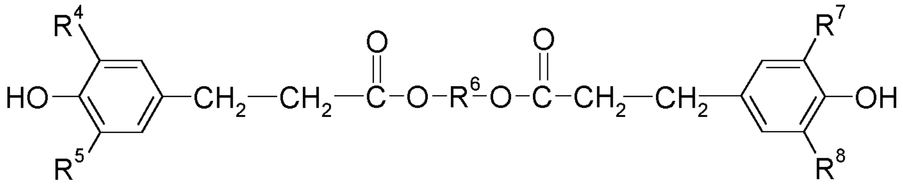

where $R^4$, $R^5$, $R^7$, and $R^8$, independently of one another, are $C_1$-$C_8$-alkyl groups which themselves may have substitution (at least one of these being a bulky group), and $R^6$ is a divalent aliphatic radical which has from 1 to 10 carbon atoms and whose main chain may also have CO bonds. At least one of $R^4$ to $R^8$ is a bulky group as defined above.

Preferred compounds corresponding to these formulae are

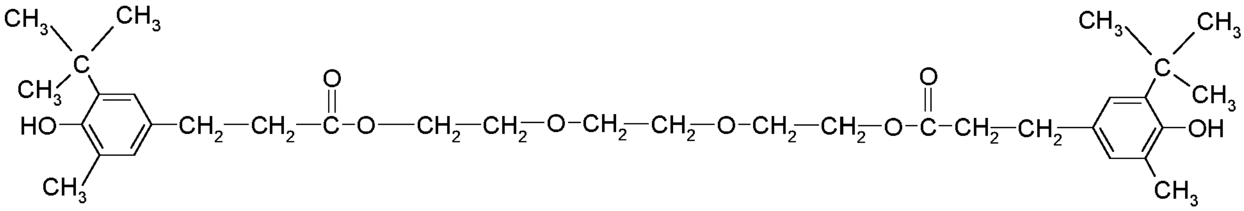

(Irganox® 245 from BASF SE)

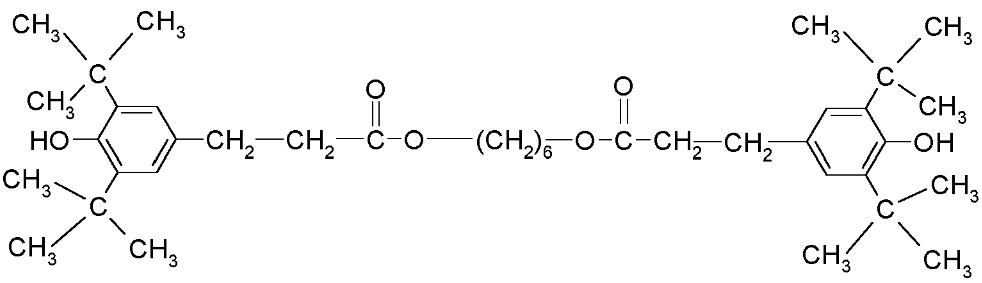

(Irganox® 259 from BASF SE)

All of the following should be mentioned as examples of sterically hindered phenols: 2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)propionate] (Irganox® 1010 from BASF SE), distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-ditert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

Compounds which have proven particularly effective and which are therefore used with preference are 2,2'-methylenebis(4-methyl-6-tert-butylphenol), 1,6-hexanediol bis(3,5-di-tert-butyl-4-hydroxyphenyl)propionate (Irganox® 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox® 1098), and the products Irganox® 245 and Irganox® 1010 described above from BASF SE, which have particularly good suitability.

In some instances, sterically hindered phenols having not more than one sterically hindered group in ortho-position with respect to the phenolic hydroxy group have proven particularly advantageous; in particular when assessing colorfastness on storage in diffuse light over prolonged periods.

The molding compositions are free from copper, specifically from copper stabilizers, such as Cu/(I)halides, and combinations of Cu(I)halides with alkali metal halides.

Preferably, the thermoplastic molding compositions of the present inventions are metal halide-free. Metal halide-free systems, so-called electro-friendly systems, are of high interest, since electro-mobility, electrification and connectivity are an increasing trend in almost all industries.

Therefore, the thermoplastic molding composition is preferably free from metal halides, specifically Cu halides and alkali metal halides.

The molding compositions of the invention can comprise from 0.001 to 10 wt%, preferably from 0.05 to 5 wt%, in particular from 0.1 to 2.5 wt% of iron powder having a particle size of at most 10 μm ($d_{50}$ value). The iron powder is preferably obtainable via thermal decomposition of pentacarbonyl iron.

Iron occurs in a number of allotropes:

1. α-Fe (ferrite) forms space-centered cubic lattices, is magnetizable, dissolves a small amount of carbon, and occurs in pure iron up to 928°C. At 770°C (Curie temperature) it loses its ferromagnetic properties and becomes paramagnetic; iron in the temperature range from 770 to 928°C is also termed β-Fe. At normal temperature and at a pressure of at least 13 000 MPa, α-Fe becomes what is known as ε-Fe with a reduction of about 0.20 $cm^3$/mol in volume, whereupon density increases from 7.85 to 9.1 (at 20 000 MPa);
2. γ-Fe (austenite) forms face-centered cubic lattices, is nonmagnetic, dissolves a large amount of carbon, and is observable only in the temperature range from 928 to 1398°C;
3. δ-Fe, space-centered, exists at from 1398°C to the melting point of 1539°C.

Metallic iron is generally silver-white, density 7.874 (heavy metal), melting point 1539°C, boiling point 2880°C; specific heat (from 18 to 100°C) about 0.5 $g^{-1}$ $K^{-1}$, tensile strength from 220 to 280 $N/mm^2$. The values apply to chemically pure iron.

Industrial production of iron uses smelting of iron ores, iron slags, calcined pyrites, or blast-furnace dust, and resmelting of scrap and alloys.

The iron powder of the invention is produced via thermal decomposition of iron pentacarbonyl, preferably at temperatures of from 150°C to 350°C. The particles thus obtainable have a preferably spherical shape, therefore being spherical or almost spherical (another term used being spherolitic).

Preferred iron powder has the particle size distribution described below; particle size distribution here is determined by means of laser scattering in very dilute aqueous suspension (e.g. using a Beckmann LS13320). The particle size (and distribution) described hereinafter can optionally be obtained via grinding and/or sieving.

$d_{xx}$ here means that XX% of the total volume of the particles is smaller than the stated value.

| | |
|---|---|
| $d_{50}$ values: | at most 10 μm, preferably from 1.6 to 8 μm, in particular from 2.9 to 7.5 μm, very particularly from 3.4 to 5.2 μm |
| $d_{10}$ values: | preferably from 1 to 5 μm, in particular from 1 to 3 μm, and very particularly from 1.4 to 2.7 μm |
| $d_{90}$ values: | preferably from 3 to 35 μm, in particular from 3 to 12 μm, and very particularly from 6.4 to 9.2 μm. |

The iron powder preferably has iron content of from 97 to 99.8 g/100 g, preferably from 97.5 to 99.6 g/100 g. Content of other metals is preferably below 1000 ppm, in particular below 100 ppm, and very particularly below 10 ppm.

Fe content is usually determined via infrared spectroscopy.

C content is preferably from 0.01 to 1.2 g/100 g, preferably from 0.05 to 1.1 g/100 g, and in particular from 0.4 to 1.1 g/100 g. This C content in the preferred iron powders corresponds to that of powders which are not reduced using hydrogen after the thermal decomposition process.

The carbon content is usually determined by combustion of the sample in a stream of oxygen and then using IR to detect the resultant $CO_2$ gas (by means of a Leco CS230 or CS-mat 6250 from Juwe) by a method based on ASTM E1019.

Nitrogen content is preferably at most 1.5 g/100 g, preferably from 0.01 to 1.2 g/100 g.

Oxygen content is preferably at most 1.3 g/100 g, preferably from 0.3 to 0.65 g/100 g.

N and O are determined via heating of the specimen to about 2100°C in a graphite furnace. The oxygen obtained from the specimen here is converted to CO and measured by way of an IR detector. The N liberated under the reaction conditions from the N-containing compounds is discharged with the carrier gas and detected and recorded by means of TCD (Thermal Conductivity Detector) (both methods based on ASTM E1019).

Tap density is preferably from 2.5 to 5 $g/cm^3$, in particular from 2.7 to 4.4 $g/cm^3$. This generally means the density when the powder is, for example, charged to the container and compacted by vibration. Iron powders to which further preference is given can have been surface-coated with iron phosphate, with iron phosphite, or with $SiO_2$.

BET surface area to DIN ISO 9277 is preferably from 0.1 to 10 $m^2/g$, in particular from 0.1 to 5 $m^2/g$, and preferably from 0.2 to 1 $m^2/g$, and in particular from 0.4 to 1 $m^2/g$.

In order to achieve particularly good dispersion of the iron particles, a masterbatch may be used, involving a polymer. Suitable polymers for this purpose are polyolefins, polyesters, or polyamides, and it is preferable here that the masterbatch polymer is the same as component A. The mass fraction of the iron in the polymer is generally from 15 to 80 wt%, preferably from 20 to 40 wt%.

Examples of other conventional additives F are amounts of up to 25 wt%, preferably up to 20 wt% of elastomeric

polymers (also often termed impact modifiers, elastomers, or rubbers).

The elastomeric polymers are different from component B.

These are very generally copolymers preferably composed of at least two of the following monomers: ethylene, propylene, butadiene, isobutene, isoprene, chloroprene, vinyl acetate, styrene, acrylonitrile and acrylates and/or methacrylates having from 1 to 18 carbon atoms in the alcohol component.

Polymers of this type are described, for example, in Houben-Weyl, Methoden der organischen Chemie, vol. 14/1 (Georg-Thieme-Verlag, Stuttgart, Germany, 1961), pages 392 to 406, and in the monograph by C.B. Bucknall, Toughened Plastics (Applied Science Publishers, London, UK, 1977).

Some preferred types of such elastomers are described below.

Preferred types of such elastomers are those known as ethylene-propylene (EPM) and ethylene-propylene-diene (EPDM) rubbers.

EPM rubbers generally have practically no residual double bonds, whereas EPDM rubbers may have from 1 to 20 double bonds per 100 carbon atoms.

Examples which may be mentioned of diene monomers for EPDM rubbers are conjugated dienes, such as isoprene and butadiene, non-conjugated dienes having from 5 to 25 carbon atoms, such as 1,4-pentadiene, 1,4-hexadiene, 1,5-hexadiene, 2,5-dimethyl-1 ,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricycledienes, such as 3-methyltricyclo[5.2.1.$0^{2,6}$]-3,8-decadiene, and mixtures of these. Preference is given to 1,5-hexadiene, 5-ethylidenenorbornene and dicyclopentadiene. The diene content of the EPDM rubbers is preferably from 0.5 to 50 wt%, in particular from 1 to 8 wt%, based on the total weight of the rubber.

EPM rubbers and EPDM rubbers may preferably also have been grafted with reactive carboxylic acids or with derivatives of these. Examples of these are acrylic acid, methacrylic acid and derivatives thereof, e.g. glycidyl (meth)acrylate, and also maleic anhydride.

Copolymers of ethylene with acrylic acid and/or methacrylic acid and/or with the esters of these acids are another group of preferred rubbers. The rubbers may also comprise dicarboxylic acids, such as maleic acid and fumaric acid, or derivatives of these acids, e.g. esters and anhydrides, and/or monomers comprising epoxy groups. These dicarboxylic acid derivatives or monomers comprising epoxy groups are preferably incorporated into the rubber by adding to the monomer mixture monomers comprising dicarboxylic acid groups and/or epoxy groups and having the general formulae I or II or III or IV

$$R^1C(COOR^2)=C(COOR^3)R^4 \qquad (I)$$

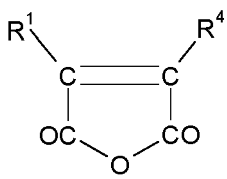

(II)

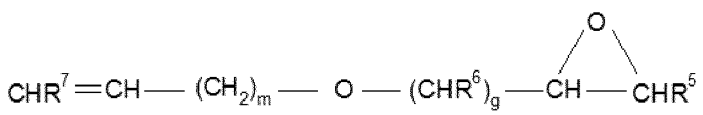

(III)

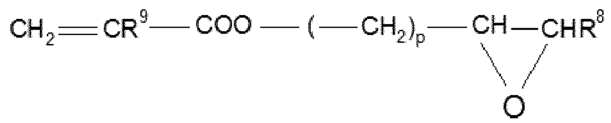

(IV)

where $R^1$ to $R^9$ are hydrogen or alkyl groups having from 1 to 6 carbon atoms, and m is a whole number from 0 to 20, g is a whole number from 0 to 10 and p is a whole number from 0 to 5.

The radicals $R^1$ to $R^9$ are preferably hydrogen, where m is 0 or 1 and g is 1. The corresponding compounds are maleic acid, fumaric acid, maleic anhydride, allyl glycidyl ether and vinyl glycidyl ether.

Preferred compounds of the formulae I, II and IV are maleic acid, maleic anhydride and (meth)acrylates comprising epoxy groups, such as glycidyl acrylate and glycidyl methacrylate, and the esters with tertiary alcohols, such as tert-butyl acrylate. Although the latter have no free carboxy groups, their behavior approximates to that of the free acids

and they are therefore termed monomers with latent carboxy groups.

The copolymers are advantageously composed of from 50 to 98 wt% of ethylene, from 0.1 to 20 wt% of monomers comprising epoxy groups and/or methacrylic acid and/or monomers comprising anhydride groups, the remaining amount being (meth)acrylates.

Particular preference is given to copolymers composed of

- from 50 to 98 wt%, in particular from 55 to 95 wt% of ethylene,
- from 0.1 to 40 wt%, in particular from 0.3 to 20 wt% of glycidyl acrylate and/or glycidyl methacrylate, (meth)acrylic acid and/or maleic anhydride, and
- from 1 to 45 wt%, in particular from 5 to 40 wt% of n-butyl acrylate and/or 2-ethylhexyl acrylate.

Other preferred (meth)acrylates are the methyl, ethyl, propyl, isobutyl and tert-butyl esters.

Comonomers which may be used alongside these are vinyl esters and vinyl ethers.

The ethylene copolymers described above may be prepared by processes known per se, preferably by random copolymerization at high pressure and elevated temperature. Appropriate processes are well-known.

Other preferred elastomers are emulsion polymers whose preparation is described, for example, by Blackley in the monograph "Emulsion Polymerization". The emulsifiers and catalysts which can be used are known per se.

In principle it is possible to use homogeneously structured elastomers or else those with a shell structure. The shell-type structure is determined by the sequence of addition of the individual monomers. The morphology of the polymers is also affected by this sequence of addition.

Monomers which may be mentioned here, merely as examples, for the preparation of the rubber fraction of the elastomers are acrylates, such as, for example, n-butyl acrylate and 2-ethylhexyl acrylate, corresponding methacrylates, butadiene and isoprene, and also mixtures of these. These monomers may be copolymerized with other monomers, such as, for example, styrene, acrylonitrile, vinyl ethers and with other acrylates or methacrylates, such as methyl methacrylate, methyl acrylate, ethyl acrylate or propyl acrylate.

The soft or rubber phase (with a glass transition temperature of below 0°C) of the elastomers may be the core, the outer envelope or an intermediate shell (in the case of elastomers whose structure has more than two shells). Elastomers having more than one shell may also have more than one shell composed of a rubber phase.

If one or more hard components (with glass transition temperatures above 20°C) are involved, besides the rubber phase, in the structure of the elastomer, these are generally prepared by polymerizing, as principal monomers, styrene, acrylonitrile, methacrylonitrile, α-methylstyrene, p-methylstyrene, or acrylates or methacrylates, such as methyl acrylate, ethyl acrylate or methyl methacrylate. Besides these, it is also possible to use relatively small proportions of other comonomers.

It has proven advantageous in some cases to use emulsion polymers which have reactive groups at their surfaces. Examples of groups of this type are epoxy, carboxy, latent carboxy, amino and amide groups, and also functional groups which may be introduced by concomitant use of monomers of the general formula

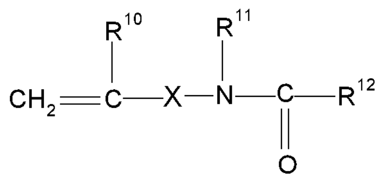

,

where the substituents can be defined as follows:

$R^{10}$ is hydrogen or a $C_1$-$C_4$-alkyl group,

$R^{11}$ is hydrogen, a $C_1$-$C_8$-alkyl group or an aryl group, in particular phenyl,

$R^{12}$ is hydrogen, a $C_1$-$C_{10}$-alkyl group, a $C_6$-$C_{12}$-aryl group, or $-OR^{13}$,

$R^{13}$ is a $C_1$-$C_8$-alkyl group or a $C_6$-$C_{12}$-aryl group, which can optionally have substitution by groups that comprise O or by groups that comprise N,

X is a chemical bond, a $C_1$-$C_{10}$-alkylene group, or a $C_6$-$C_{12}$-arylene group, or

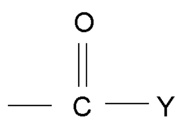

Y is O-Z or NH-Z, and
Z is a $C_1$-$C_{10}$-alkylene or $C_6$-$C_{12}$-arylene group.

The graft monomers described in EP-A 208 187 are also suitable for introducing reactive groups at the surface.
Other examples which may be mentioned are acrylamide, methacrylamide and substituted acrylates or methacrylates, such as (N-tert-butylamino)ethyl methacrylate, (N,N-dimethylamino)ethyl acrylate, (N,N-dimethylamino)methyl acrylate and (N,N-diethylamino)ethyl acrylate.
The particles of the rubber phase may also have been crosslinked. Examples of crosslinking monomers are 1,3-butadiene, divinylbenzene, diallyl phthalate and dihydrodicyclopentadienyl acrylate, and also the compounds described in EP-A 50 265.
It is also possible to use the monomers known as graft-linking monomers, i.e. monomers having two or more polymerizable double bonds which react at different rates during the polymerization. Preference is given to the use of compounds of this type in which at least one reactive group polymerizes at about the same rate as the other monomers, while the other reactive group (or reactive groups), for example, polymerize(s) significantly more slowly. The different polymerization rates give rise to a certain proportion of unsaturated double bonds in the rubber. If another phase is then grafted onto a rubber of this type, at least some of the double bonds present in the rubber react with the graft monomers to form chemical bonds, i.e. the phase grafted on has at least some degree of chemical bonding to the graft base.
Examples of graft-linking monomers of this type are monomers comprising allyl groups, in particular allyl esters of ethylenically unsaturated carboxylic acids, for example allyl acrylate, allyl methacrylate, diallyl maleate, diallyl fumarate and diallyl itaconate, and the corresponding monoallyl compounds of these dicarboxylic acids. Besides these there is a wide variety of other suitable graft-linking monomers. For further details reference may be made here, for example, to US patent 4 148 846.
The proportion of these crosslinking monomers in the impact-modifying polymer is generally up to 5 wt%, preferably not more than 3 wt%, based on the impact-modifying polymer.
Some preferred emulsion polymers are listed below. Mention may first be made here of graft polymers with a core and with at least one outer shell, and having the following structure:

| Type | Monomers for the core | Monomers for the envelope |
|---|---|---|
| I | 1,3-butadiene, isoprene, n-butyl acrylate, ethylhexyl acrylate, or a mixture of these | styrene, acrylonitrile, methyl methacrylate |
| II | as I, but with concomitant use of crosslinking agents | as I |
| III | as I or II | n-butyl acrylate, ethyl acrylate, methyl acrylate, 1,3-butadiene, isoprene, ethylhexyl acrylate |
| IV | as I or II | as I or III, but with concomitant use of monomers having reactive groups, as described herein |
| V | styrene, acrylonitrile, methyl methacrylate, or a mixture of these | first envelope composed of monomers as described under I and II for the core, second envelope as described under I or IV for the envelope |

Instead of graft polymers whose structure has more than one shell, it is also possible to use homogeneous, i.e. single-shell, elastomers composed of 1,3-butadiene, isoprene and n-butyl acrylate or of copolymers of these. These products, too, may be prepared by concomitant use of crosslinking monomers or of monomers having reactive groups.
Examples of preferred emulsion polymers are n-butyl acrylate-(meth)acrylic acid copolymers, n-butyl acrylate/glycidyl acrylate or n-butyl acrylate/glycidyl methacrylate copolymers, graft polymers with an inner core composed of n-butyl acrylate or based on butadiene and with an outer envelope composed of the abovementioned copolymers, and copolymers of ethylene with comonomers which supply reactive groups.
The elastomers described may also be prepared by other conventional processes, e.g. by suspension polymerization.
Preference is also given to silicone rubbers, as described in DE-A 37 25 576, EP-A 235 690, DE-A 38 00 603 and EP-A 319 290.
It is, of course, also possible to use mixtures of the types of rubber listed above.
UV stabilizers that may be mentioned, the amounts of which used are generally up to 2 wt%, based on the molding composition, are various substituted resorcinols, salicylates, benzotriazoles, and benzophenones.
Materials that can be added as colorants are inorganic pigments, such as titanium dioxide, ultramarine blue,

iron oxide, and carbon black, and also organic pigments, such as phthalocyanines, quinacridones, perylenes, and also dyes, such as anthraquinones.

The molding compositions of the invention can comprise, as component F, from 0.05 to 5% by weight, preferably from 0.1 to 2% by weight, and in particular from 0.25 to 1.5% by weight, of a nigrosine.

Nigrosines are generally a group of black or gray phenazine dyes (azine dyes) related to the indulines and taking various forms (water-soluble, oleosoluble, spirit-soluble), used in wool dyeing and wool printing, in black dyeing of silks, and in the coloring of leather, of shoe creams, of varnishes, of plastics, of stoving lacquers, of inks, and the like, and also as microscopy dyes.

Nigrosines are obtained industrially via heating of nitrobenzene, aniline, and aniline hydrochloride with metallic iron and $FeCl_3$ (the name being derived from the Latin niger = black).

Component C5) can be used in the form of free base or else in the form of salt (e.g. hydrochloride).

Further details concerning nigrosines can be found by way of example in the encyclopedia "Römpp-Chemie-Lexikon", Thieme-Verlag Stuttgart, 1995, keyword "nigrosine".

Materials that can be used as nucleating agents are sodium phenylphosphinate, aluminum oxide, silicon dioxide, and also preferably talc.

The thermoplastic molding compositions can furthermore contain flame retardants as component F.

As component F, the thermoplastic molding materials can comprise 1.0 to 10.0 wt%, preferably 2.0 to 6.0 wt%, in particular 3.0 to 5.0 wt%, of at least one phosphazene of general formula (IX) or (X) as flame retardant.

The minimum amount of component F is at least 1.0 wt%, preferably 2.0 wt%, in particular 3.0 wt%.

The maximum amount of component F is 10.0 wt%, preferably 6.0 wt%, particularly preferably 5.0 wt%.

"Phosphazenes" is to be understood as meaning cyclic phosphazenes of general formula (IX)

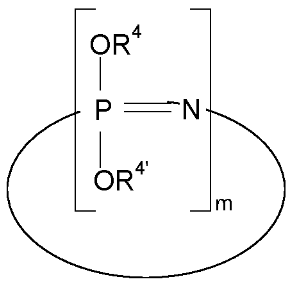

(IX)

,

in which m is an integer from 3 to 25 and $R^4$ and $R^{4'}$ are identical or different and represent $C_1$-$C_{20}$-alkyl-, $C_6$-$C_{30}$-aryl-, $C_6$-$C_{30}$-arylalkyl- or $C_6$-$C_{30}$-alkyl-substituted aryl or linear phosphazenes of general formula (X)

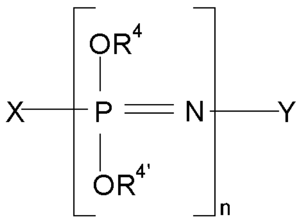

(X)

,

in which n represents 3 to 1000 and X represents -N = $P(OPh)_3$ or -N = P(O)OPh and Y represents $-P(OPh)_4$ or $-P(O)(OPh)_2$.

The production of such phosphazenes is described in EP-A 0 945 478.

Particular preference is given to cyclic phenoxyphosphazenes of formula $P_3N_3C_{36}$ of formula (XI)

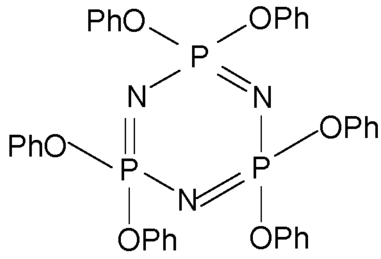

(XI)

or linear phenoxyphosphazenes according to formula (XII)

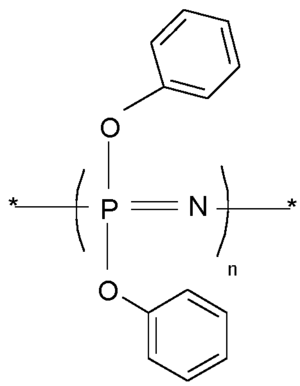

(XII)

The phenyl radicals may optionally be substituted. Phosphazenes in the context of the present application are described in Mark, J. E., Allcock, H. R., West, R., Inorganic Polymers, Prentice Hall, 1992, pages 61 to 141.

Preferably employed as component F are cyclic phenoxyphosphazenes having at least three phenoxyphosphazene units. Corresponding phenoxyphosphazenes are described for example in US 2010/0261818 in paragraphs [0051] to [0053]. Reference may in particular be made to formula (I) therein. Corresponding cyclic phenoxyphosphazenes are furthermore described in EP-A-2 100 919, in particular in paragraphs [0034] to [0038] therein. Production may be effected as described in EP-A-2 100 919 in paragraph [0041]. In one embodiment of the invention the phenyl groups in the cyclic phenoxyphosphazene may be substituted by $C_{1-4}$-alkyl radicals. It is preferable when pure phenyl radicals are concerned.

For further description of the cyclic phosphazenes reference may be made to Römpp Chemie Lexikon, 9th ed., keyword "phosphazenes". Production is effected for example via cyclophosphazene which is obtainable from $PCl_5$ and $NH_4Cl$, wherein the chlorine groups in the cyclophosphazene have been replaced by phenoxy groups by reaction with phenol.

The cyclic phenoxy phosphazene compound may for example be produced as described in Allcock, H. R., Phosphorus-Nitrogen Compounds (Academic Press, 1972), and in Mark, J. E., Allcock, H. R., West, R., Inorganic Polymers (Prentice Hall, 1992).

Component F is preferably a mixture of cyclic phenoxyphosphazenes having three and four phenoxy phosphazene units. The weight ratio of rings comprising three phenoxyphosphazene units to rings comprising four phenoxyphosphazene units is preferably about 80:20. Larger rings of the phenoxyphosphazene units may likewise be present but in smaller amounts. Suitable cyclic phenoxyphosphazenes are obtainable from Fushimi Pharmaceutical Co., Ltd., under the name Rabitle® FP-100. This is a matt-white/yellowish solid having a melting point of 110°C, a phosphorus content of 13.4% and a nitrogen content of 6.0%. The proportion of rings comprising three phenoxyphosphazene units is at least 80.0 wt%.

The thermoplastic molding materials preferably comprise 1.0 to 6.0 wt%, preferably 2.5 to 5.5 wt%, in particular 3.0 to 5.0 wt% of at least one aliphatic or aromatic ester of phosphoric acid or polyphosphoric acid as flame retardant.

For this reason especially solid, non-migrating phosphate esters having a melting point between 70°C and 150°C are preferred. This has the result that the products are easy to meter and exhibit markedly less migration in the molding material. Particularly preferred examples are the commercially available phosphate esters PX-200 (CAS: 139189-30-3) from Daihachi, or Sol-DP from ICL-IP. Further phosphate esters with appropriate substitution of the phenyl groups are conceivable when this allows the preferred melting range to be achieved. The general structural formula, depending on the substitution pattern in the ortho position or the para position on the aromatic ring, is as follows:

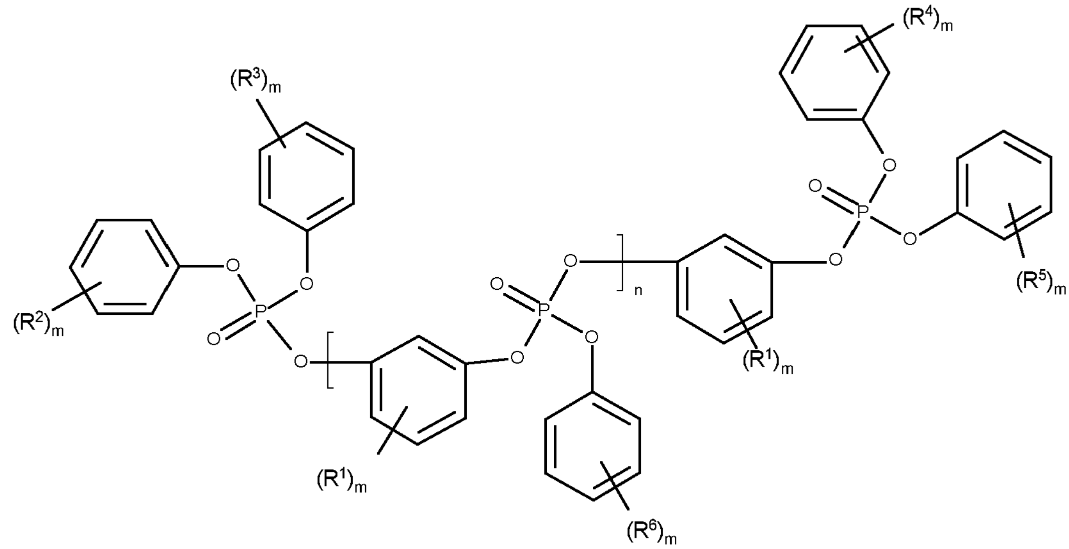

or

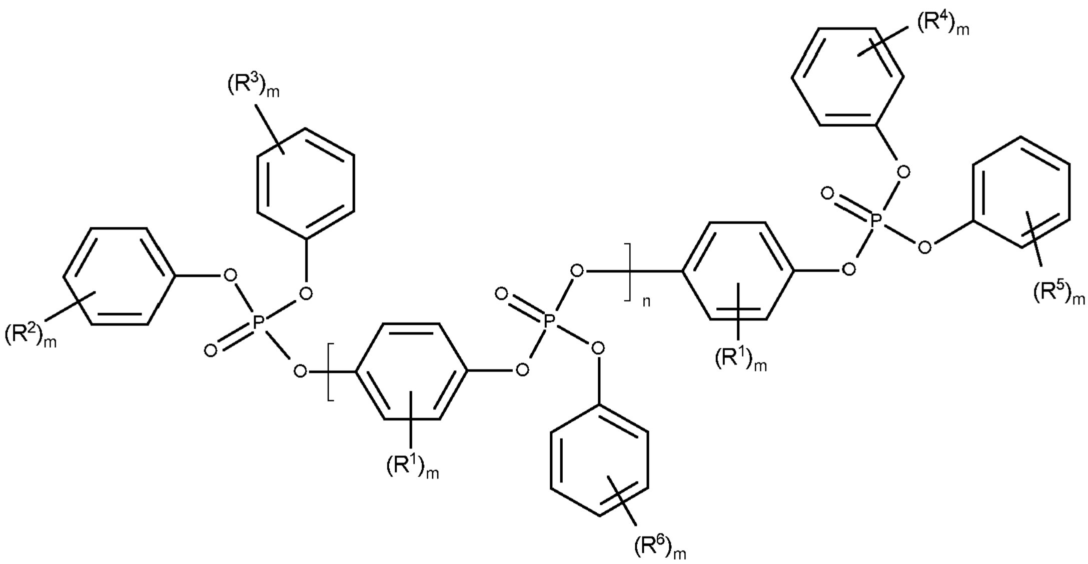

or

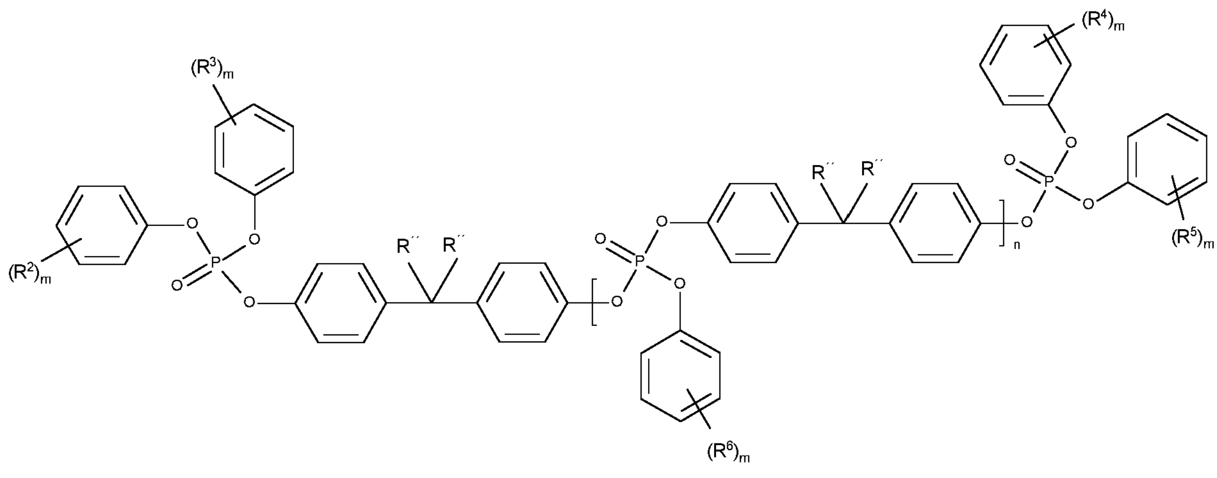

,

wherein

| | |
|---|---|
| $R^1$ = | H, methyl, ethyl or isopropyl, but preferably H. |
| n = | between 0 and 7, but preferably 0. |
| $R^{2-6}$ = | H, methyl, ethyl or isopropyl, but preferably methyl. $R^6$ is preferably identical to $R^4$ and $R^5$. |
| m = | may be, but needs not be identical and is between 1, 2, 3, 4 and 5, but preferably 2. |
| R" = | may be H, methyl, ethyl or cyclopropyl, but preferably methyl and H. |

PX-200 is given as a concrete example:

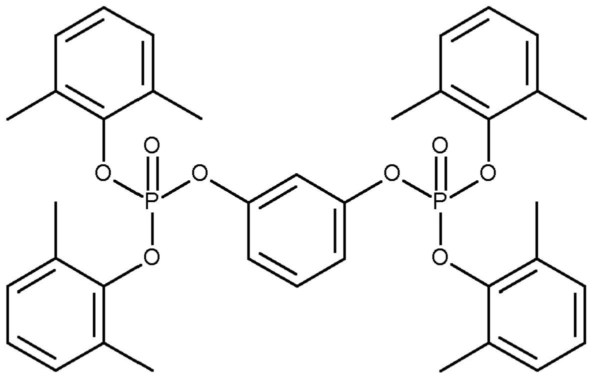

It is particularly preferable when at least one aromatic ester of polyphosphoric acid is employed. Such aromatic polyphosphates are obtainable for example from Daihachi Chemical under the name PX-200.

As component F, the thermoplastic molding materials according to the invention can comprise 5.0 to 30.0 wt%, preferably 10.0 to 25.0 wt%, in particular 12.0 to 20.0 wt%, for example about 16.0 wt%, of at least one metal phosphinate or phosphinic acid salt described hereinbelow as flame retardant.

The minimum amount of this component F is 5.0 wt%, preferably 10.0 wt%, in particular 12.0 wt%.

The maximum amount of this component F is 30.0 wt%, preferably 25.0 wt%, particularly preferably 20.0 wt%.

Examples of preferred flame retardants of component F are metal phosphinates derived from hypophosphorous acid. A metal salt of hypophosphorous acid with Mg, Ca, Al or Zn as the metal may be employed for example. Particular preference is given here to aluminum hypophosphite.

Also suitable are phosphinic acid salts of formula (I) or/and diphosphinic acid salts of formula (II) or polymers thereof

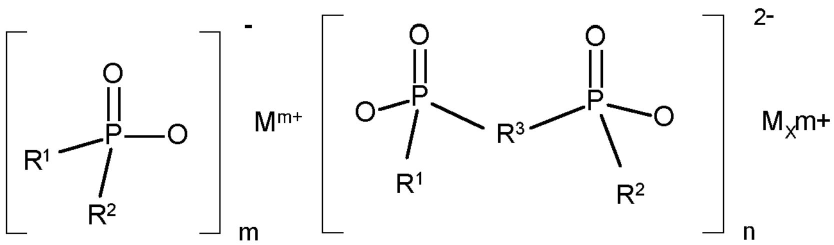

,

in which

| | |
|---|---|
| $R^1$, $R^2$ | are identical or different and represent hydrogen, $C_1$-$C_6$-alkyl, linear or branched, and/or aryl; |
| $R^3$ | represents $C_1$-$C_{10}$-alkylene, linear or branched, $C_6$-$C_{10}$-arylene, -alkylarylene or -aryl-alkylene; |
| M | represents Mg, Ca, Al, Sb, Sn, Ge, Ti, Zn, Fe, Zr, Ce, Bi, Sr, Mn, Li, Na, K and/or a pro-tonated nitrogen base; |

m = 1 to 4; n = 1 to 4; x = 1 to 4, preferably m = 3, x = 3.

Preferably, $R^1$, $R^2$ are identical or different and represent hydrogen, methyl, ethyl, n-propyl, isopropyl, n-butyl, tert.-butyl, n-pentyl and/or phenyl.

Preferably, $R^3$ represents methylene, ethylene, n-propylene, isopropylene, n-butylene, tert-butylene, n-pentylene, n-octylene or n-dodecylene, phenylene or naphthylene; methylphenylene, ethylphenylene, tert-butylphenylene, methylnaphthylene, ethylnaphthylene or tert-butylnaph-thylene; phenylmethylene, phenylethylene, phenylpropylene or

phenylbutylene.

Particularly preferably, $R^1$, $R^2$ are hydrogen, methyl, ethyl, and M is Al, particular preference is given to Al hypophosphite.

Production of the phosphinates is preferably effected by precipitation of the corresponding metal salts from aqueous solutions. However, the phosphinates may also be precipitated in the presence of a suitable inorganic metal oxide or sulfide as support material (white pigments, for example $TiO_2$, $SnO_2$, ZnO, ZnS, $SiO_2$). This accordingly affords surface-modified pigments which can be employed as laser-markable flame retardants for thermoplastic polyesters.

It is preferable when metal salts of substituted phosphinic acids are employed in which compared to hypophosphorous acid one or two hydrogen atoms have been replaced by phenyl, methyl, ethyl, propyl, isobutyl, isooctyl or radicals R'-CH-OH have been replaced by R'-hydrogen, phenyl, tolyl. The metal is preferably Mg, Ca, Al, Zn, Ti, Fe. Aluminum diethylphosphinate (DE-PAL) is particularly preferred.

For a description of phosphinic acid salts or diphosphinic acid salts reference may be made to DE-A 199 60 671 and also to DE-A 44 30 932 and DE-A 199 33 901.

Further flame retardants are, for example, halogen-containing flame retardants.

Suitable halogen-containing flame retardants are preferably brominated compounds, such as brominated diphenyl ether, brominated trimethylphenylindane (FR 1808 from DSB) tetrabromobisphenol A and hexabromocyclododecane.

Suitable flame retardants are preferably brominated compounds, such as brominated oligocarbonates (BC 52 or BC 58 from Great Lakes), having the structural formula:

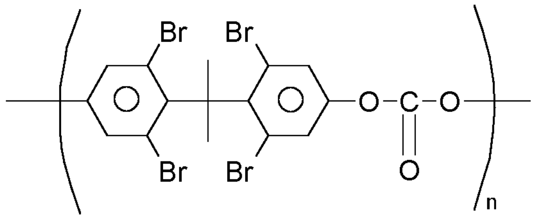

$n < 3$

.

Especially suitable are polypentabromobenzyl acrylates, where n > 4 (e.g. FR 1025 from ICL-IP having the formula:

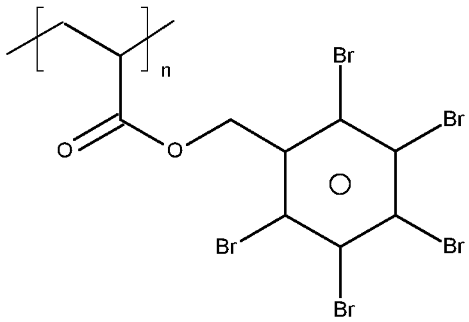

.

Preferred brominated compounds further include oligomeric reaction products (n > 3) of tetrabromobisphenol A with epoxides (e.g. FR 2300 and 2400 from DSB) having the formula:

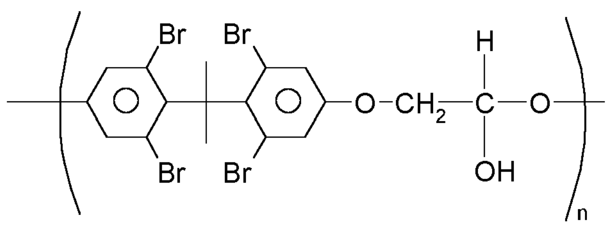

.

The brominated oligostyrenes preferably employed as flame retardants have an average degree of polymerization (number-average) between 3 and 90, preferably between 5 and 60, measured by vapor pressure osmometry in

toluene. Cyclic oligomers are likewise suitable. In a preferred embodiment of the invention the brominated oligomeric styrenes have the formula I shown below in which R represents hydrogen or an aliphatic radical, in particular an alkyl radical, for example $CH_2$ or $C_2H_5$, and n represents the number of repeating chain building blocks. $R^1$ may be H or else bromine or else a fragment of a customary free radical former:

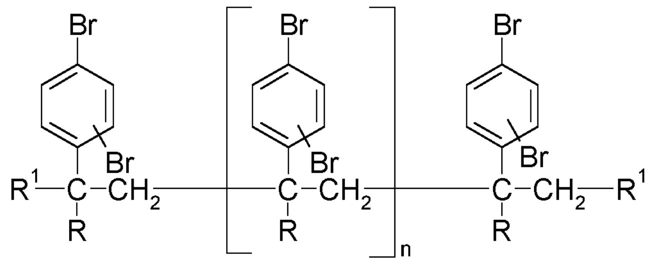

(I)

.

The value n may be 1 to 88, preferably 3 to 58. The brominated oligostyrenes comprise 40.0 to 80.0 wt%, preferably 55.0 to 70.0 wt%, of bromine. Preference is given to a product consisting predominantly of polydibromostyrene. The substances are meltable without decomposing, and soluble in tetrahydrofuran for example. Said substances may be produced either by ring bromination of - optionally aliphatically hydrogenated - styrene oligomers such as are obtained for example by thermal polymerization of styrene (according to DT-OS 25 37 385) or by free-radical oligomerization of suitable brominated styrenes. The production of the flame retardant may also be effected by ionic oligomerization of styrene and subsequent bromination. The amount of brominated oligostyrene necessary for endowing the polyamides with flame retardant properties depends on the bromine content. The bromine content in the molding materials according to the invention is from 2.0 to 30.0 wt%, preferably from 5.0 to 12.0 wt%.

The brominated polystyrenes according to the invention are typically obtained by the process described in EP-A 047 549:

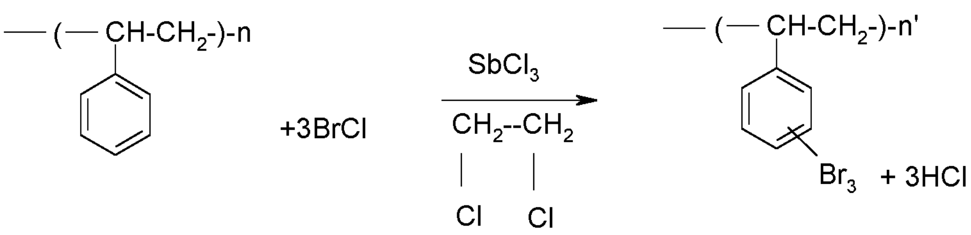


(II) (III)

.

The brominated polystyrenes obtainable by this process and commercially available are predominantly ring-substituted tribrominated products. n' (see III) generally has values of 125 to 1500 which corresponds to a molecular weight of 42500 to 235000, preferably of 130000 to 135000.

The bromine content (based on the content of ring-substituted bromine) is generally at least 50.0 wt%, preferably at least 60.0 wt% and in particular 65.0 wt%.

The commercially available pulverulent products generally have a glass transition temperature of 160°C to 200°C and are for example obtainable under the names SAYTEX® HP-7010 from Albemarle and Pyrocheck® PB 68 from Ferro Corporation.

Mixtures of the brominated oligostyrenes with brominated polystyrenes may also be employed in the molding materials according to the invention, the mixing ratio being freely choosable.

Also suitable are chlorine-containing flame retardants, Declorane Plus® from OxyChem being preferable.

Suitable halogen-containing flame retardants are preferably ring-brominated polystyrene, brominated polybenzyl acrylates, brominated bisphenol A epoxide oligomers or brominated bisphenol A polycarbonates.

In one embodiment of the invention no halogen-containing flame retardants are employed in the thermoplastic molding materials according to the invention.

A flame retardant melamine compound suitable as component F in the context of the present invention is a melamine compound which when added to glass fiber filled polyamide molding materials reduces flammability and influences fire behavior in a fire retarding fashion, thus resulting in improved properties in the UL 94 tests and in the glow wire test.

The melamine compound is for example selected from melamine borate, melamine phosphate, melamine

sulfate, melamine pyrophosphate, melam, melem, melon or melamine cyanurate or mixtures thereof.

The melamine cyanurate preferentially suitable according to the invention is a reaction product of preferably equimolar amounts of melamine (formula I) and cyanuric acid/isocyanuric acid (formulae Ia and Ib).

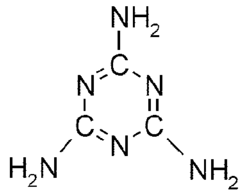

(I)

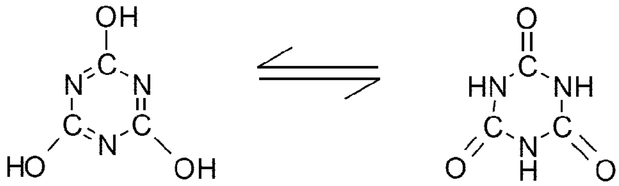

(Ia) Enol form

(Ib) Keto form

.

It is obtained for example by reaction of aqueous solutions of the starting compounds at 90°C to 100°C. The commercially available product is a white powder having an average grain size $d_{50}$ of 1.5 to 7 $\mu$m and a $d_{99}$ value of less than 50 $\mu$m.

Further suitable compounds (often also described as salts or adducts) are melamine sulfate, melamine, melamine borate, oxalate, phosphate prim., phosphate sec. and pyrophosphate sec., melamine neopentyl glycol borate. According to the invention the molding materials are preferably free from polymeric melamine phosphate (CAS no. 56386-64-2 or 218768-84-4).

This is to be understood as meaning melamine polyphosphate salts of a 1,3,5-triazine compound which have an average degree of condensation number n between 20 and 200 and a 1,3,5-triazine content of 1.1 to 2.0 mol of a 1,3,5-triazine compound selected from the group consisting of melamine, melam, melem, melon, ammeline, ammelide, 2-ureidomelamine, acetoguanamine, benzoguanamine and diaminophenyltriazine per mole of phosphorus atom. Preferably, the n-value of such salts is generally between 40 and 150 and the ratio of a 1,3,5-triazine compound per mole of phosphorus atom is preferably between 1.2 and 1.8. Furthermore, the pH of a 10 wt% aqueous slurry of salts produced according to EP-B1 095 030 will generally be more than 4.5 and preferably at least 5.0. The pH is typically determined by adding 25 g of the salt and 225 g of clean water at 25°C into a 300 ml beaker, stirring the resultant aqueous slurry for 30 minutes and then measuring the pH. The abovementioned n-value, the number-average degree of condensation, may be determined by means of 31P solid-state NMR. J. R. van Wazer, C. F. Callis, J. Shoolery and R. Jones, J. Am. Chem. Soc., 78, 5715, 1956 discloses that the number of adjacent phosphate groups gives a unique chemical shift which permits clear distinction between orthophosphates, pyrophosphates, and polyphosphates.

Suitable guanidine salts are

| | CAS no. |
|---|---|
| g carbonate | 593-85-1 |
| g cyanurate prim. | 70285-19-7 |
| g phosphate prim. | 5423-22-3 |
| g phosphate sec. | 5423-23-4 |
| g sulfate prim. | 646-34-4 |
| g sulfate sec. | 594-14-9 |
| guanidine pentaerythritol borate | n.a. |
| guanidine neopentyl glycol borate | n.a. |
| and urea phosphate green | 4861-19-2 |
| urea cyanurate | 57517-11-0 |

(continued)

| | CAS no. |
|---|---|
| ammeline | 645-92-1 |
| ammelide | 645-93-2 |
| melem | 1502-47-2 |
| melon | 32518-77-7 |

In the context of the present invention "compounds" is to be understood as meaning not only for example benzoguanamine itself and the adducts/salts thereof but also the nitrogen-substituted derivatives and the adducts/salts thereof.

Also suitable are ammonium polyphosphate $(NH_4PO_3)_n$ where n is about 200 to 1000, preferably 600 to 800, and tris(hydroxyethyl)isocyanurate (THEIC) of formula IV

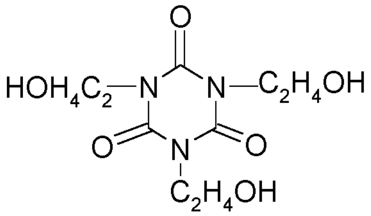

IV

or the reaction products thereof with aromatic carboxylic acids $Ar(COOH)_m$ which may optionally be present in a mixture with one another, wherein Ar represents a monocyclic, bicyclic or tricyclic aromatic six-membered ring system and m is 2, 3 or 4.

Examples of suitable carboxylic acids include phthalic acid, isophthalic acid, terephthalic acid, 1,3,5-benzenetricarboxylic acid, 1,2,4-benzenetricarboxylic acid, pyromellitic acid, mellophanic acid, prehnitic acid, 1-naphthoic acid, 2-naphthoic acid, naphthalenedicarboxylic acids, and anthracenecarboxylic acids.

Production is effected by reaction of the tris(hydroxyethyl)isocyanurate with the acids, the alkyl esters thereof or the halides thereof according to the processes in EP-A 584 567.

Such reaction products are a mixture of monomeric and oligomeric esters which may also be crosslinked. The degree of oligomerization is typically 2 to about 100, preferably 2 to 20. Preference is given to using mixtures of THEIC and/or reaction products thereof with phosphorus-containing nitrogen compounds, in particular $(NH_4PO_3)$, or melamine pyrophosphate or polymeric melamine phosphate. The mixing ratio for example of $(NH_4PO_3)_n$ to THEIC is preferably 90.0 to 50.0:10.0 to 50.0, in particular 80.0 to 50.0:50.0 to 20.0, wt% based on the mixture of such compounds.

Also suitable flame retardants are benzoguanidine compounds of formula V

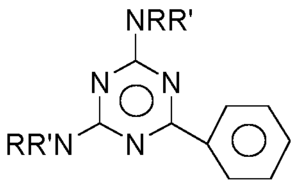

(V),

in which R, R' represents straight-chain or branched alkyl radicals having 1 to 10 carbon atoms, preferably hydrogen, and in particular adducts thereof with phosphoric acid, boric acid and/or pyrophosphoric acid.

Also preferred are allantoin compounds of formula VI,

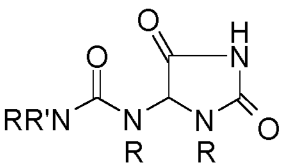

(VI)

,

wherein R, R' are as defined in formula V, and also the salts thereof with phosphoric acid, boric acid and/or pyrophosphoric acid and also glycolurils of formula VII or the salts thereof with the abovementioned acids

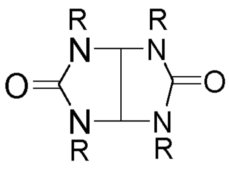

(VII)

,

in which R is as defined in formula V.

Suitable products are commercially available or obtainable as per DE-A 196 14 424.

The cyanoguanidine (formula VIII) usable in accordance with the invention is obtainable for example by reacting calcium cyanamide with carbonic acid, the cyanamide produced dimerizing at from pH 9 to pH 10 to afford cyanoguanidine.

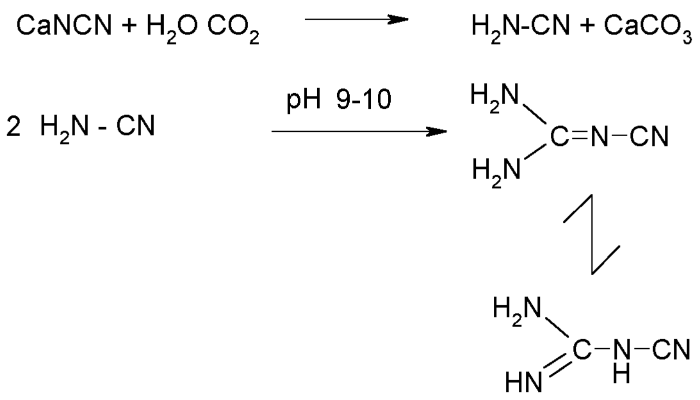


VIII

.

The commercially available product is a white powder having a melting point of 209°C to 211°C.

It is particularly preferable to employ melamine cyanurate (for example Melapur® MC25 from BASF SE).

It is further possible to employ separate metal oxides such as antimony trioxide, antimony pentoxide, sodium antimonate and similar metal oxides. However it is preferable to eschew the use of such metal oxide since they are already present in component F. For a description of penta-bromobenzyl acrylate and antimony trioxide or antimony pentoxide reference may be made to EP-A 0 624 626.

It is also possible to employ phosphorus, for example red phosphorus, as flame retardant. Red phosphorus may for example be employed in the form of a masterbatch.

Also contemplated are dicarboxylic acids of formula

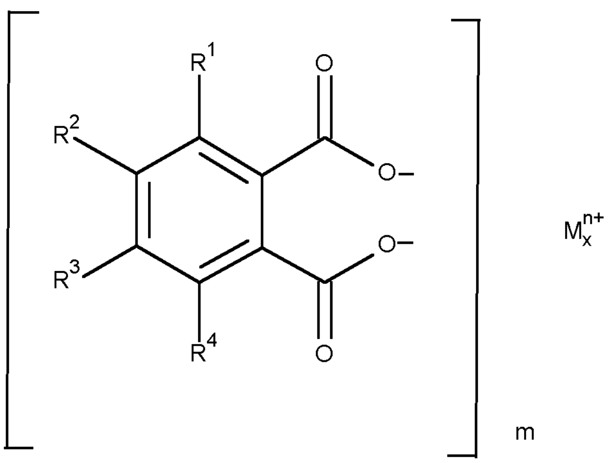

,

wherein

$R^1$ to $R^4$ independently of one another represent halogen or hydrogen with the proviso that at least one radical $R^1$ to $R^4$ represents halogen,

x = 1 to 3, preferably 1, 2
m = 1 to 9, preferably 1 to 3, 6, 9, in particular 1 to 3
n = 2 to 3
M = alkaline earth metal, Ni, Ce, Fe, In, Ga, Al, Pb, Y, Zn, Hg.

Preferred dicarboxylic acid salts comprise as radicals $R^1$ to $R^4$ independently of one another Cl or bromine or hydrogen, especially preferably all radicals $R^1$ to $R^4$ are Cl or/and Br.

Be, Mg, Ca, Sr, Ba, Al, Zn, Fe are preferred as metals M.

Such dicarboxylic acid salts are commercially available or producible according to the processes described in US 3,354,191.

Also employable as component F are functional polymers. These may be flame retardant polymers for example. Such polymers are described in US 8,314,202 for example and comprise 1,2-bis[4-(2-hydroxyethoxy)phenyl]ethanone repeating units. A further suitable functional polymer for increasing the amount of carbon residue is poly(2,6-dimethyl-1,4-phenyleneoxide) (PPPO).

The thermoplastic molding compositions of the invention can be produced by processes known per se, by mixing the starting components in conventional mixing apparatus, such as screw-based extruders, Brabender mixers, or Banbury mixers, and then extruding the same. After extrusion, the extrudate can be cooled and pelletized. It is also possible to premix individual components and then to add the remaining starting materials individually and/or likewise in the form of a mixture. The mixing temperatures are generally from 230 to 320°C.

These materials are suitable for the production of fibers, foils, and moldings of any type. Some examples follow: cylinder head covers, motorcycle covers, intake manifolds, charge-air-cooler caps, plug connectors, gearwheels, cooling-fan wheels, and cooling-water tanks.

In the electrical and electronic sector, improved-flow polyamides can be used to produce plugs, plug parts, plug connectors, membrane switches, printed circuit board modules, microelectronic components, coils, I/O plug connectors, plugs for printed circuit boards (PCBs), plugs for flexible printed circuits (FPCs), plugs for flexible integrated circuits (FFCs), high-speed plug connections, terminal strips, connector plugs, device connectors, cable-harness components, circuit mounts, circuit-mount components, three-dimensionally injection-molded circuit mounts, electrical connection elements, and mechatronic components.

Possible uses in automobile interiors are for dashboards, steering-column switches, seat components, headrests, center consoles, gearbox components, and door modules, and possible uses in automobile exteriors are for door handles, exterior-mirror components, windshield-wiper components, windshield-wiper protective housings, grilles, roof rails, sunroof frames, engine covers, cylinder-head covers, intake pipes (in particular intake manifolds), windshield wipers, and also external bodywork components.

The combination of components B and C lead to an efficient system to stabilize polyamides at 180°C and above, while maintaining a completely metal halide-free system.

In a preferred embodiment, the thermoplastic molding compositions are totally halide-free, so that they also do not contain halogen-containing flame retardants.

Especially the combination of a polyethylenimine homo- or copolymer with the secondary aryl amine and/or condensation product of a secondary aryl amine and aliphatic aldehydes, aliphatic ketones, or mixtures thereof proved to be an efficient system to stabilize polyamides. The additives do not bloom out to the surface, even under moisture uptake or under electrical tension. Therefore, pollution and corrosion of electrical components can be avoided.

Examples

The following components were used:

| | |
|---|---|
| PA1: | Polyamide-66 having a viscosity number of 150 ml/g, measured on a 0.5% strength by weight solution in 96% strength by weight of sulfuric acid at 25°C to ISO 307, melting point: 260°C (Ultramid® A27 from BASF SE) |
| PA2: | Polyamide-6 having a viscosity number of 150 ml/g, measured on a 0.5% strength by weight solution in 96% strength by weight of sulfuric acid at 25°C to ISO 307, melting point: 220°C (Ultramid® B27 from BASF SE) |
| GF: | Standard E glass fiber, NEG T249H |
| Lubricant: | Ethylene bis stearamide (EBS) from Lonza Cologne GmbH |
| Stabilizer 1: | Cuprous iodide (CAS: 7681-65-4) |
| Stabilizer 2: | Potassium iodide (CAS: 7681-11-0) |
| Stabilizer 3: | OKAFLEX™ EM from OKA-Tec GmbH |

(continued)

| | |
|---|---|
| Stabilizer 4: | Polyethylenimine (CAS: 9002-98-6), Lupasol® WF from BASF SE |
| Colorant: | Solvent Black 7 (CAS: 8005-02-5) |

Preparation of the granules

The natural-colored polyamide granulates were previously dried in a drying oven at 100°C for four hours so that the moisture content was below 0.1% while all other ingredients were premixed in a tumble mixer for 10 minutes. In the next step, the dried polyamide granulates together with the dry blended ingredients were melt-extruded and granulated using a twin-screw extruder with a diameter of 25 mm and an LID ratio of 44 at 300°C cylinder temperature for PA66 and 280°C respectively for PA6. The resulting granules were injection-molded on an injection molding machine at 300°C melt temperature for PA66 and 280°C melt temperature for PA6 to various specimen for the adjacent characterization.

Compositions and mechanical data for inventive (INV) and comparative (COMP) examples are listed in below Table 1.

Tensile modulus of elasticity, tensile stress at break and tensile strain at break are determined according to ISO 527. The Charpy (notched) impact strength is determined according to ISO 179-2/1eU and ISO 179-2/1eAf, respectively. Melting point and crystallization temperature are determined according to ISO 11357 using differential scanning calorimetry (DSC). All of the norms refer to the version valid in 2020.

Heat aging experiments were conducted in a standard laboratory oven at elevated temperatures and air as indicated in the tables below. Retention of tensile strength and elongation at break after heat aging in comparison with the value of the virgin specimens, the non-heat-aged control specimens were considered as being 100%.

Table 1

| | COMP1 | COMP2 | INV1 | INV2 |
|---|---|---|---|---|
| PA 1 | 0 | 0 | 0 | 50.75 |
| PA 2 | 69.22 | 68.97 | 67.75 | 12 |
| GF | 30 | 30 | 30 | 35 |
| Lubricant | 0.2 | 0.2 | 0.2 | 0.2 |
| Stabilizer 1 | 0.06 | 0.06 | 0 | 0 |
| Stabilizer 2 | 0.22 | 0.22 | 0 | 0 |
| Colorant | 0.3 | 0.3 | 0.3 | 0.3 |
| Stabilizer 3 | 0 | 0 | 1.5 | 1.5 |
| Stabilizer 4 | 0 | 0.25 | 0.25 | 0.25 |
| Mechanical properties (dry), 23°C | | | | |
| Modulus of elasticity (ISO 527) [MPa] | 9357 | 9555 | 9749 | 11269 |
| Tensile strength (ISO 527) [MPa] | 173 | 180 | 179 | 199 |
| Elongation at break (ISO 527) [%] | 3.9 | 3.6 | 3.5 | 2.9 |
| Impact strength (ISO 179/1eU) [kJ/m$^2$] | 96.4 | 83.8 | 87.3 | 83.1 |
| Notched impact strength [kJ/m$^2$] | 12.8 | 10.4 | 12 | 11.1 |
| Aging 150°C | | | | |
| Tensile strength (ISO 527) (3000h) [MPa] | 149 | 162 | 168 | 181 |
| Retention of tensile strength after 3000 hours [%] | 86 | 90 | 94 | 91 |
| Aging 180°C | | | | |
| Tensile strength (ISO 527) (3000h) [MPa] | 141.0 | 153.0 | 153.0 | 162 |
| Retention of tensile strength after 3000 hours [%] | 81 | 85 | 85 | 81 |

The above examples illustrate that by employing the combination of stabilizer 4 (a polyethylenimine according to component B) and stabilizer 3 (according to component C), polyamide molding compositions can be obtained which show a high retention of tensile strength after prolonged heat-treatment. The high retention of tensile strength can be achieved without using CuI and KI.

Superior results were obtained in comparison to a stabilizer system formed of CuI/KI. When compared to a stabilizer system comprising CuI, KI and polyethylenimine, the stabilized system according to the present invention leads to a similar tensile strength after heat aging at 180°C and an improved tensile strength after heat aging at 150°C. The

compositions according to the present invention INV1 and INV2 did not require the presence of CuI/KI in order to achieve this effect.

When instead of polyamide 66, a polyamide 6 is employed as thermoplastic polymer, similar results were achieved, see Example INV2.

The above examples illustrate that by employing a combination of polyethylenimine homo- or copolymers with an aromatic amine co-stabilizer selected from secondary aryl amine compounds and/or condensation products of secondary aryl amines, aliphatic aldehydes and aliphatic ketones, the retention of the tensile strength, especially at an aging temperature of 150°C, can be significantly improved.

## Claims

**1.** A thermoplastic molding composition, comprising

a) 30 to 99.8 wt% of at least one thermoplastic polyamide as component A;
b) 0.001 to 5 wt% of at least one polyethylenimine homo-or copolymer as component B;
c) 0.1 to 2.0 wt% of at least one condensation product of secondary aryl amines and aliphatic aldehydes, aliphatic ketones, or mixtures thereof, or a combination of at least one secondary aryl amine and the at least one condensation product; as component C;
d) 0 to 3 wt% of at least one lubricant as component D;
e) 0 to 50 wt% of at least one fibrous and/or particulate filler as component E;
f) 0 to 25 wt% of further additives as component F,

wherein the total of wt% of components A to F is 100 wt%, which is free from copper.

**2.** The thermoplastic molding composition according to claim 1, wherein component B is selected from

- homopolymers of ethylenimine,
- copolymers of ethylenimine and amines having at least two amino groups,
- crosslinked polyethylenimines,
- grafted polyethylenimines,
- amidated polymers obtainable by reaction of polyethylenimines with carboxylic acids or carboxylic esters, carboxylic anhydrides, carboxamides or carbonyl halides,
- alkoxylated polyethylenimines,
- hydroxyl-containing polyethylenimines,
- amphoteric polyethylenimines and
- lipophilic polyethylenimines.

**3.** The thermoplastic molding composition according to claim 1 or 2, wherein component B has a weight average molecular weight $M_w$ of 100 to 3000000 g/mol, preferably 500 to 2000000 g/mol, more preferably more than 700 to 1500000 g/mol.

**4.** The thermoplastic molding composition according to one of claims 1 to 3, wherein component B is a polyethylenimine homopolymer having a weight average molecular weight $M_w$ of 10000 to 50000 g/mol.

**5.** The thermoplastic molding composition according to one of claims 1 to 4, wherein component D is selected from aluminum salts, alkali metal salts, alkaline earth metal salts, esters or amides, of fatty acids having from 10 to 44 carbon atoms.

**6.** The thermoplastic molding composition according to one of claims 1 to 5, which is free from metal halides.

**7.** The thermoplastic molding composition according to one of claims 1 to 6, wherein component C comprises or is at least one condensation product of diaryl amine with formaldehyde and/or acetone.

**8.** The thermoplastic molding composition according to claim 7, wherein component C further comprises at least one secondary aryl amine.

**9.** The thermoplastic molding composition according to one of claims 1 to 8, wherein component D is present in an

amount of from 0.05 to 3 wt%, preferably 0.1 to 1.5 wt%, more preferably 0.1 to 1.0 wt%.

**10.** The thermoplastic molding composition according to one of claims 1 to 9, wherein component E comprises glass fibers, and is present in an amount of from 10 to 50 wt%, preferably 15 to 45 wt%, more preferably 20 to 40 wt%.

**11.** A process for preparing the thermoplastic molding composition according to one of claims 1 to 10 by mixing the components A to F.

**12.** The use of the thermoplastic molding composition according to one of claims 1 to 10 for producing fibers, foils and moldings of any type.

**13.** A fiber, foil or molding, made of the thermoplastic molding composition according to one of claims 1 to 10.

## Patentansprüche

**1.** Thermoplastische Formmasse, enthaltend

a) 30 bis 99,8 Gew.-% mindestens eines thermoplastischen Polyamids als Komponente A;
b) 0,001 bis 5 Gew.-% mindestens eines Polyethylenimin-Homo- oder -Copolymers als Komponente B;
c) 0,1 bis 2,0 Gew.-% mindestens eines Kondensationsprodukts von sekundären Arylaminen und aliphatischen Aldehyden, aliphatischen Ketonen oder Mischungen davon oder eine Kombination von mindestens einem sekundären Arylamin und dem mindestens einen Kondensationsprodukt; als Komponente C;
d) 0 bis 3 Gew.-% mindestens eines Schmiermittels als Komponente D;
e) 0 bis 50 Gew.-% mindestens eines faser- und/oder teilchenförmigen Füllstoffs als Komponente E;
f) 0 bis 25 Gew.-% weiterer Zusatzstoffe als Komponente F;

wobei die Summe der Gew.-%-Anteile der Komponenten A bis F 100 Gew.-% ergibt, die frei von Kupfer ist.

**2.** Thermoplastische Formmasse nach Anspruch 1, wobei Komponente B ausgewählt ist aus

- Homopolymeren des Ethylenimins,
- Copolymer aus Ethylenimin und Aminen mit mindestens zwei Aminogruppen,
- vernetzten Polyethyleniminen,
- gepfropften Polyethyleniminen,
- amidierten Polymeren, die durch Umsetzung von Polyethyleniminen mit Carbonsäuren oder Carbonsäureestern, Carbonsäureanhydriden, Carboxamiden oder Carbonylhalogeniden erhältlich sind,
- alkoxylierten Polyethyleniminen,
- hydroxylgruppenhaltigen Polyethyleniminen,
- amphoteren Polyethyleniminen und
- lipophilen Polyethyleniminen.

**3.** Thermoplastische Formmasse nach Anspruch 1 oder 2, wobei Komponente B ein gewichtsmittleres Molekulargewicht $M_w$ von 100 bis 3.000.000 g/mol, vorzugsweise 500 bis 2.000.000 g/mol, weiter bevorzugt mehr als 700bis 1.500.000 g/mol, aufweist.

**4.** Thermoplastische Formmasse nach einem der Ansprüche 1 bis 3, wobei es sich bei Komponente B um ein Polyethylenimin-Homopolymer mit einem gewichtsmittleren Molekulargewicht $M_w$ von 10.000 bis 50.000 g/mol handelt.

**5.** Thermoplastische Formmasse nach einem der Ansprüche 1 bis 4, wobei Komponente D aus Aluminiumsalzen, Alkalimetallsalzen, Erdalkalimetallsalzen, Estern oder Amiden von Fettsäuren mit 10 bis 44 Kohlenstoffatomen ausgewählt ist.

**6.** Thermoplastische Formmasse nach einem der Ansprüche 1 bis 5, die frei von Metallhalogeniden ist.

**7.** Thermoplastische Formmasse nach einem der Ansprüche 1 bis 6, wobei Komponente C mindestens ein Kondensationsprodukt von Diarylamin mit Formaldehyd und/oder Aceton umfasst oder ist.

**8.** Thermoplastische Formmasse nach Anspruch 7, wobei Komponente C ferner mindestens ein sekundäres Arylamin umfasst.

**9.** Thermoplastische Formmasse nach einem der Ansprüche 1 bis 8, wobei Komponente D in einer Menge von 0,05 bis 3 Gew.-%, vorzugsweise 0,1 bis 1,5 Gew.-%, weiter bevorzugt 0,1 bis 1,0 Gew.-%, vorliegt.

**10.** Thermoplastische Formmasse nach einem der Ansprüche 1 bis 9, wobei Komponente E Glasfasern umfasst und in einer Menge von 10 bis 50 Gew.-%, vorzugsweise 15 bis 45 Gew.-%, weiter bevorzugt 20 bis 40 Gew.-%, vorliegt.

**11.** Verfahren zur Herstellung der thermoplastischen Formmasse nach einem der Ansprüche 1 bis 10 durch Vermischen der Komponenten A bis F.

**12.** Verwendung der thermoplastischen Formmasse nach einem der Ansprüche 1 bis 10 zur Herstellung von Fasern, Folien und Formkörpern jeglicher Art.

**13.** Faser, Folie oder Formkörper aus der thermoplastischen Formmasse nach einem der Ansprüche 1 bis 10.

**Revendications**

**1.** Composition de moulage thermoplastique, comprenant

a) 30 à 99,8 % en poids d'au moins un polyamide thermoplastique ;
en tant que composant A ;
b) 0,001 à 5 % en poids d'au moins un homopolymère ou copolymère de polyéthylènimine
en tant que composant B ;
c) 0,1 à 2,0 % en poids d'au moins un produit de condensation d'amines aryliques secondaires et d'aldéhydes aliphatiques, de cétones aliphatiques ou de mélanges correspondants, ou d'une combinaison d'au moins une amine arylique secondaire et de l'au moins un produit de condensation ; en tant que composant C ;
d) 0 à 3 % en poids d'au moins un lubrifiant en tant que composant D ;
e) 0 à 50 % en poids d'au moins une charge fibreuse et/ou particulaire
en tant que composant E ;
f) 0 à 25 % en poids d'additifs supplémentaires en tant que composant F,

le total de % en poids des composants A à F étant de 100 % en poids,
qui est exempte de cuivre.

**2.** Composition de moulage thermoplastique selon la revendication 1, le composant B étant sélectionné parmi

- homopolymères d'éthylènimine,
- copolymères d'éthylèneimine et d'amines ayant au moins deux groupes amino,
- polyéthylènimines réticulées,
- polyéthylènimines greffées,
- polymères amidés pouvant être obtenus par réaction de polyéthylènimines avec des acides carboxyliques ou des esters carboxyliques, des anhydrides carboxyliques, des carboxyamides ou des halogénures de carbonyle,
- polyéthylènimines alkylées,
- polyéthylènimines contenant hydroxyle,
- polyéthylènimines amphotères et
- polyéthylènimines lipophiles.

**3.** Composition de moulage thermoplastique selon la revendication 1 ou 2, le composant B ayant un poids moléculaire moyen en poids $M_w$ de 100 à 3 000 000 g/mole, préférablement de 500 à 2 000 000 g/mole, plus préférablement plus de 700 à 1 500 000 g/mole.

**4.** Composition de moulage thermoplastique selon l'une des revendications 1 à 3, le composant B étant un homopolymère de polyéthylènimine ayant un poids moléculaire moyen en poids $M_w$ de 10 000 à 50 000 g/mole.

5. Composition de moulage thermoplastique selon l'une des revendications 1 à 4, le composant D étant sélectionné parmi des sels d'aluminium, des sels de métaux alcalins, des sels de métaux alcalino-terreux, des esters ou des amides, d'acides gras ayant de 10 à 44 atomes de carbone.

6. Composition de moulage thermoplastique selon l'une des revendications 1 à 5, qui est exempte d'halogénures métalliques.

7. Composition de moulage thermoplastique selon l'une des revendications 1 à 6, le composant C comprenant ou étant au moins un produit de condensation d'une diarylamine avec du formaldéhyde et/ou de l'acétone.

8. Composition de moulage thermoplastique selon la revendication 7, le composant C comprenant en outre au moins une amine arylique secondaire.

9. Composition de moulage thermoplastique selon l'une des revendications 1 à 8, le composant D étant présent en une quantité allant de 0,05 à 3 % en poids, préférablement de 0,1 à 1,5 % en poids, plus préférablement de 0,1 à 1,0 % en poids.

10. Composition de moulage thermoplastique selon l'une des revendications 1 à 9, le composant E comprenant des fibres de verre, et étant présent en une quantité allant de 10 à 50 % en poids, préférablement de 15 à 45 % en poids, préférablement de 20 à 40 % en poids.

11. Procédé de préparation de la composition de moulage thermoplastique selon l'une des revendications 1 à 10 par mélange des composants A à F.

12. Utilisation de la composition de moulage thermoplastique selon l'une des revendications 1 à 10 pour la production de fibres, de feuilles et de moulages de tout type.

13. Fibre, feuille ou moulage, composé (e) de la composition de moulage thermoplastique selon l'une des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1851265 B1
- EP 2356174 B1
- EP 2379644 B1
- EP 0463512 A1
- DE 1152252
- DE 1123103
- US 2011021687 A1
- DE 1152252 B
- DE 1123103 B
- US 2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- EP 1994075 A
- EP 129195 A
- EP 129196 A
- DE 102009011668 A
- WO 9412560 A
- DE 19931720 A
- US 4144123 A
- EP 895521 A
- EP 25515 A
- EP 675914 A
- EP 0509282 B1
- US 1906935 A
- US 1975167 A
- EP 2307480 B1
- DE 2702661 A
- US 4360617 A
- EP 208187 A
- EP 50265 A
- US 4148846 A
- DE 3725576 A
- EP 235690 A
- DE 3800603 A
- EP 319290 A
- EP 0945478 A
- US 20100261818 A
- EP 2100919 A
- DE 19960671 A
- DE 4430932 A
- DE 19933901 A
- FR 1808
- FR 1025
- FR 2300
- FR 2400
- EP 047549 A
- EP 095030 B1
- EP 584567 A
- DE 19614424 A
- EP 0624626 A
- US 3354191 A
- US 8314202 B


### Non-patent literature cited in the description


- Chemie. Georg-Thieme-Verlag, 1961, vol. 14/1, 392-406
- **C.B. BUCKNALL.** Toughened Plastics. Applied Science Publishers, 1977
- **MARK, J. E. ; ALLCOCK, H. R ; WEST, R.** Inorganic Polymers. Prentice Hall, 1992, 61-141
- **H. R., PHOSPHORUS-NITROGEN.** Compounds. Academic Press, 1972
- **MARK, J. E. ; ALLCOCK, H. R. ; WEST, R.** Inorganic Polymers. Prentice Hall, 1992
- *CHEMICAL ABSTRACTS,* 139189-30-3
- *CHEMICAL ABSTRACTS,* 56386-64-2
- *CHEMICAL ABSTRACTS,* 218768-84-4
- **J. R. VAN WAZER ; C. F. CALLIS ; J. SHOOLERY ; R. JONE.** *J. Am. Chem. Soc.,* 1956, vol. 78, 5715
- *CHEMICAL ABSTRACTS,* 7681-65-4
- *CHEMICAL ABSTRACTS,* 7681-11-0
- *CHEMICAL ABSTRACTS,* 9002-98-6
- *CHEMICAL ABSTRACTS,* 8005-02-5